(19) Europäisches Patentamt
European Patent Office
Office européen des brevets

(11) Numéro de publication : **0 037 766**
**B1**

(12) **FASCICULE DE BREVET EUROPÉEN**

(45) Date de publication du fascicule du brevet :
13.06.84

(21) Numéro de dépôt : **81400471.9**

(22) Date de dépôt : **25.03.81**

(51) Int. Cl.³ : **H 04 N 5/13**, H 01 J 9/42

(54) **Procédé d'analyse de la convergence d'un tube cathodique à trois canons en ligne et dispositif formant capteur permettant la mise en oeuvre de ce procédé.**

(30) Priorité : 02.04.80 FR 8007412

(43) Date de publication de la demande :
14.10.81 Bulletin 81/41

(45) Mention de la délivrance du brevet :
13.06.84 Bulletin 84/24

(84) Etats contractants désignés :
**DE GB NL**

(56) Documents cités :
**EP-A- 0 020 934**
**DE-A- 2 842 818**
**GB-A- 1 220 900**
**US-A- 4 001 877**
**US-A- 4 193 086**

(73) Titulaire : **VIDEOCOLOR Société Anonyme**
**Périsud 7, boulevard Romain Rolland**
**F-92128 Montrouge (FR)**

(72) Inventeur : **Pons, Claude**
**Via U Pavoni, no 29**
**Grotta Ferrata (Roma) (IT)**

(74) Mandataire : **Boireau, Jacques**
**Thomson-CSF SCPI 173, boulevard Haussmann**
**F-75379 Paris Cedex 08 (FR)**

Jouve, 18, rue St-Denis, 75001 Paris, France

## Description

(pour les Etats contractants : DE et GB)

L'invention concerne un procédé d'analyse de la convergence dans un tube cathodique à trois canons en ligne, notamment pour un tube cathodique couleur et concerne plus particulièrement un procédé permettant une mesure rapide et sensiblement automatique des écarts de convergence entre les faisceaux engendrés par lesdits canons. L'invention concerne également tout particulièrement un dispositif formant capteur, permettant la mise en œuvre de ce procédé. L'invention a été notamment développée pour permettre une automatisation de tout le processus de réglage de convergence des tubes de télévision couleur à trois canons en ligne et à masque d'ombre.

On ne dispose pas à ce jour d'une méthode d'analyse de convergence, suffisamment précise et rapide, des tubes de télévision couleur. Notamment, la méthode simple consistant à mesurer les distances séparant les points d'impact des faisceaux sur l'écran, en l'absence de balayage, n'est guère applicable à cause des dangers qu'elle fait subir aux luminophores de l'écran.

Une méthode d'analyse connue consiste à afficher une « mire » sur l'écran, présentant simultanément des lignes et colonnes d'au moins deux des trois couleurs et à évaluer directement leurs divergences sur l'écran. L'analyse est donc purement visuelle (quelle soit directe ou faite au microscope) et ne peut être accomplie que par un opérateur très expérimenté. L'analyse complète et les corrections de convergence du tube cathodique s'effectuent donc dans ce cas de façon presque entièrement manuelle et c'est l'une des phases les plus longues et les plus délicates que l'on rencontre dans la mise au point d'un tube cathodique de télévision.

On connaît aussi une méthode plus ou moins automatisée qui consiste à analyser une image de l'écran au moyen d'un appareil de prise de vues de télévision, trichrome. Une telle méthode aboutit à un appareillage compliqué et coûteux et les résultats obtenus sont médiocres, principalement à cause de la résolution limitée de l'appareil de prise de vues.

L'invention propose une méthode performante d'analyse automatique de convergence, plus précise et plus rapide que celle qui vient d'être décrite brièvement ci-dessus et qui se prête à un réglage automatique, en grande série, des tubes trichromes. La méthode de l'invention se distingue principalement des méthodes connues en ce que les canons du tube cathodique sont allumés séquentiellement et non pas simultanément et en ce qu'on fait subir aux faisceaux, d'une part, un balayage de façon à produire sur l'écran une ligne lumineuse, et d'autre part, une déflexion lente perpendiculaire au balayage pour déplacer lentement la ligne sur l'écran et ce qu'on observe le passage de cette ligne devant une fente d'analyse en mémorisant à ce moment le courant dans le déviateur, les différences entre les valeurs des courants dans le déviateur, relevées pour chaque canon, étant représentatives des écarts de convergence entre ces derniers.

Dans la Demande de Brevet Européen n° 20 934, on décrit une méthode d'analyse, en particulier de la convergence d'un tube trichrome où un faisceau sur trois est allumé successivement sur un point particulier de l'écran. Puis, un cache souple permet de positionner un dispositif photosensible qui fournit un signal dont l'intensité est d'autant plus forte que la convergence locale est bonne. Un tel procédé est essentiellement manuel. Sa précision dépend largement de la précision géométrique du cache. De plus, comme le faisceau frappe constamment le même point de l'écran, celui-ci est soumis à un fort risque de détérioration. L'invention apporte aussi remède à ces inconvénients.

Plus précisément, l'invention concerne donc un procédé d'analyse de la convergence des trois faisceaux d'un tube cathodique couleur à trois canons muni d'un déviateur à bobinages de déflexion respectivement horizontale et verticale, le procédé étant du genre où le signal lumineux émis par l'écran frappé par des électrons est capté par une cellule photosensible et où le courant traversant les bobines de déflexion est alors mesuré pour fournir une indication de position, caractérisé en ce qu'il consiste, le tube étant du type à masque d'ombre perforé de trous de préférence oblongs, pour déterminer les projections des écarts de convergence entre les trois faisceaux le long d'au moins un axe de référence, suivant par exemple la direction de déviation horizontale et/ou verticale, à allumer un seul des trois canons et à appliquer un signal lentement variable au bobinage de déflexion correspondant audit axe de référence et un signal de balayage à l'autre bobinage de déflexion, de façon à engendrer sur l'écran une ligne lumineuse se déplaçant lentement parallèlement audit axe de référence, à mesurer l'intensité lumineuse à travers une fente d'analyse située parallèlement à la direction dudit balayage en une zone de l'écran où on désire déterminer les caractéristiques de convergence, à repérer la valeur du courant dans ledit bobinage de déflexion correspondant audit axe de référence lorsque l'intensité lumineuse perçue à travers ladite fente est maximum, à répéter les mêmes opérations pour les deux autres canons et à calculer lesdites projections des écarts de convergence sur ledit axe de référence, connaissant au moins les trois valeurs de courant précitées et la sensibilité de déflexion du tube cathodique dans ladite zone de l'écran.

### Description

(pour l'Etat contractant NL)

L'invention concerne un procédé d'analyse de la convergence dans un tube cathodique à trois canons en ligne, notamment pour un tube cathodique couleur et concerne plus particulièrement un procédé permettant une mesure rapide et sensiblement automatique des écarts de convergence entre les faisceaux engendrés par lesdits canons. L'invention concerne également tout particulièrement un dispositif formant capteur, permettant la mise en œuvre de ce procédé. L'invention a été notamment développée pour permettre une automatisation de tout le processus de réglage de convergence des tubes de télévision couleur à trois canons en ligne et à masque d'ombre.

On ne dispose pas à ce jour d'une méthode d'analyse de convergence, suffisamment précise et rapide, des tubes de télévision couleur. Notamment, la méthode simple consistant à mesurer les distances séparant les points d'impact des faisceaux sur l'écran, en l'absence de balayage, n'est guère applicable à cause des dangers qu'elle fait subir aux luminophores de l'écran.

Une méthode d'analyse connue consiste à afficher une « mire » sur l'écran, présentant simultanément des lignes et colonnes d'au moins deux des trois couleurs et à évaluer directement leurs divergences sur l'écran. L'analyse est donc purement visuelle (qu'elle soit directe ou faite au microscope) et ne peut être accomplie que par un opérateur très expérimenté. L'analyse complète et les corrections de convergence du tube cathodique s'effectuent donc dans ce cas de façon presque entièrement manuelle et c'est l'une des phases les plus longues et les plus délicates que l'on rencontre dans la mise au point d'un tube cathodique de télévision.

On connaît aussi une méthode plus ou moins automatisée qui consiste à analyser une image de l'écran au moyen d'un appareil de prise de vues de télévision, trichrome. Une telle méthode aboutit à un appareillage compliqué et coûteux et les résultats obtenus sont médiocres, principalement à cause de la résolution limitée de l'appareil de prise de vues.

L'invention propose une méthode performante d'analyse automatique de convergence, plus précise et plus rapide que celle qui vient d'être décrite brièvement ci-dessus et qui se prête à un réglage automatique, en grande série, des tubes trichrome. La méthode de l'invention se distingue principalement des méthodes connues en ce que les canons du tube cathodique sont allumés séquentiellement et non pas simultanément et en ce qu'on fait subir aux faisceaux, d'une part, un balayage de façon à produire sur l'écran une ligne lumineuse et, d'autre part, une déflexion lente perpendiculaire au balayage pour déplacer lentement la ligne sur l'écran et en ce qu'on observe le passage de cette ligne devant une fente d'analyse en mémorisant à ce moment le courant dans le déviateur ; les différences entre les valeurs des courants dans le déviateur, relevées pour chaque canon, étant représentatives des écarts de convergence entre ces derniers.

Plus précisément, l'invention concerne donc un procédé d'analyse de la convergence des trois faisceaux d'un tube cathodique couleur à trois canons en ligne et à masque d'ombre perforé de trous de préférence oblongs, muni d'un déviateur à bobinages de déflexion respectivement horizontale et verticale, caractérisé en ce qu'il consiste, pour déterminer les projections des écarts de convergence entre les trois faisceaux le long d'au moins un axe de référence, suivant par exemple la direction de déviation horizontale et/ou verticale, à allumer un seul des trois canons et à appliquer un signal lentement variable au bobinage de déflexion correspondant audit axe de référence et un signal de balayage à l'autre bobinage de déflexion, de façon à engendrer sur l'écran une ligne lumineuse se déplaçant lentement parallèlement audit axe de référence, à mesurer l'intensité lumineuse à travers une fente d'analyse située parallèlement à la direction dudit balayage en une zone de l'écran où on désire déterminer les caractéristiques de convergence, à repérer la valeur du courant dans ledit bobinage de déflexion correspondant audit axe de référence lorsque l'intensité lumineuse perçue à travers ladite fente est maximum, à répéter les mêmes opérations pour les deux autres canons et à calculer lesdites projections des écarts de convergence sur ledit axe de référence, connaissant au moins les trois valeurs de courant précitées et la sensibilité de déflexion du tube cathodique dans ladite zone de l'écran.

### Description

(Suite — Pour les Etats contractants : DE, GB, NL)

On notera que le procédé proposé permet d'obtenir les projections des écarts de convergence le long d'un axe. On est donc amené pour déterminer complètement ces écarts, à appliquer le procédé par rapport à deux axes de référence orthonormés qui coïncident par exemple avec la largeur et la hauteur du tube cathodique, c'est-à-dire avec les directions de déviation horizontale et verticale du tube. Comme on le verra plus loin, l'analyse utilisant un balayage horizontal du tube, c'est-à-dire avec un axe de référence parallèle à la direction de déviation verticale est relativement plus aisée que l'analyse utilisant un balayage vertical, c'est-à-dire avec un axe de référence parallèle à la direction de déviation horizontale ; ceci à cause de la disposition des colonnes de luminophores des trois couleurs fondamentales à la surface de l'écran. Le procédé proposé est cependant applicable aux deux cas. En bref, dans le premier cas, il suffit de disposer un écran opaque muni d'une fente horizontale en regard de l'écran du tube cathodique et d'observer la ligne lumineuse à travers cette fente, tandis que dans le second cas, on utilise directement les trous du masque pour réaliser l'analyse de la position relative des lignes verticales des trois couleurs.

Dans cet esprit, l'invention concerne aussi un dispositif formant capteur pour l'analyse de la convergence des trois faisceaux d'un tube cathodique couleur à trois canons en ligne et à masque d'ombre perforé de trous de préférence oblongs, muni de deux moyens déviateurs, respectivement horizontal et vertical et dont l'écran comporte des colonnes de luminophores aux trois couleurs fondamentales disposées dans un ordre répétitif prédéterminé, pour la mise en œuvre du procédé défini ci-dessus, caractérisé en ce qu'il comporte un boîtier muni d'une ouverture destinée à être positionnée contre la surface externe de l'écran dudit tube cathodique en face d'une zone de cet écran pour laquelle on désire déterminer les caractéristiques de convergence desdits canons, au moins une cellule photoélectrique et au moins une fente d'analyse ou fenêtre de sélection positionnée entre ladite ouverture et ladite cellule photoélectrique.

L'invention sera mieux comprise et d'autres buts, détails et avantages de celle-ci apparaîtront mieux à la lumière de la description qui va suivre, donnée en référence aux dessins annexés dans lesquels :

la figure 1 est un schéma illustrant les conditions de convergence de trois faisceaux d'électrons provenant de trois canons en ligne, dans un tube de télévision couleur ;

la figure 2 illustre une situation de non-convergence entre les trois faisceaux ;

la figure 3 illustre une zone de l'écran du tube cathodique pour laquelle on désire mesurer les écarts de convergence ainsi que des fentes d'analyse permettant la mise en œuvre du procédé ;

la figure 4 est une vue schématique en coupe d'un mode de réalisation d'un dispositif formant capteur permettant la mise en œuvre du procédé ;

la figure 5 est un schéma bloc illustrant l'ensemble de l'appareillage nécessaire pour la détermination des projections des écarts de convergence suivant un axe parallèle à la direction de déflexion verticale du tube cathodique ;

la figure 6 est un schéma bloc illustrant l'ensemble de l'appareillage nécessaire pour déterminer les projections des écarts de convergence suivant un axe parallèle à la direction de déflexion horizontale du tube cathodique ;

les figures 7 et 8 illustrent une variante du procédé, pour la détermination des projections des écarts de convergence suivant un axe parallèle à la direction de déflexion horizontale du tube cathodique ;

la figure 9 est une vue partielle d'un second mode de réalisation du dispositif formant capteur de la figure 4 ; et

les figures 10 et 11 illustrent une variante du procédé pour la détermination des projections des écarts de convergence le long d'un axe parallèle à la direction de déflexion horizontale, mettant en œuvre le dispositif de la figure 9.

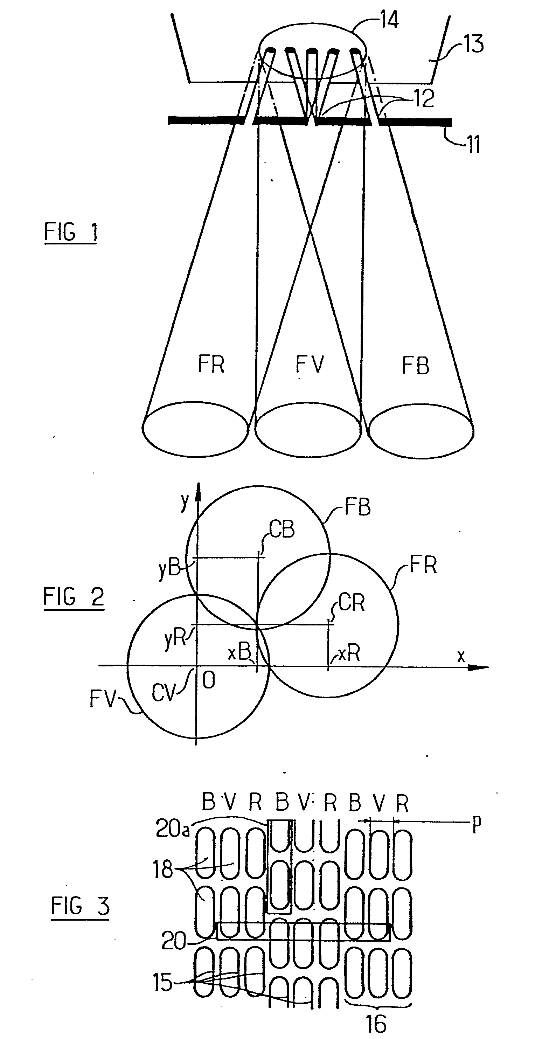

La figure 1 illustre les conditions de convergence optimales dans un tube de télévision en couleurs. Dans la suite du texte, les différents éléments analogues du tube, correspondant à chaque canon, et les colonnes de luminophores disposées sur la surface interne de l'écran du tube cathodique seront distingués par l'une des lettres R, V ou B, selon la couleur fondamentale considérée, c'est-à-dire pour un tube trichrome le Rouge, le Vert et le Bleu. Par conséquent, les trois faisceaux $F_R$, $F_V$ et $F_B$, émis par les trois canons en ligne du tube cathodique, parviennent sur le masque d'ombre 11 avec des incidences différentes pour réaliser la sélection des couleurs et, comme le montre clairement la figure 1, seules les parties (une faible proportion) des faisceaux traversant les trous 12 du masque 11 parviennent sur l'écran 13 pour illuminer des colonnes de luminophores. Les angles d'incidence des faisceaux $F_R$ et $F_B$ par rapport au faisceau $F_V$ qui atteint l'écran sous une incidence nulle sont les paramètres principaux du réglage de pureté du tube cathodique. Si le tube est réglé en pureté, chaque faisceau passant à travers un même trou du masque ne peut aboutir que sur une colonne de luminophores correspondant à sa propre couleur. La présence du masque 11 complique beaucoup l'analyse de convergence des trois faisceaux. En effet, une convergence est considérée comme optimale lorsque les trois faisceaux frappent à un instant donné (pendant le balayage) une même zone 14 de l'écran 13. Autrement dit, les trois taches lumineuses engendrées par les trois faisceaux doivent être confondues sur l'écran 13. Or, cette tache unique est fictive car elle n'est pas observable sur l'écran à cause de la présence du masque. La figure 2 montre schématiquement une situation, tout aussi fictive, de non-convergence (c'est-à-dire en supposant le masque 11 enlevé) en un emplacement donné de l'écran et lorsque les faisceaux ne sont soumis à aucun balayage. On comprend qu'il est possible de définir les écarts de convergence au moyen des projections des centres $C_R$, $C_V$ et $C_B$ des impacts des trois faisceaux dans un repère orthonormé xoy. Bien entendu, on choisira l'axe ox parallèle à la direction de déflexion horizontale du tube et d'axe oy parallèle à la direction de déflexion verticale. Dans l'exemple de la figure 2 où le centre $C_V$ est représenté confondu avec l'origine du repère xoy, on voit que les projections $x_R$, $x_B$ et $y_R$, $y_B$ des centres $C_R$ et $C_B$ sur les axes ox et oy, respectivement, sont suffisantes pour définir complètement les écarts de convergence entre les trois faisceaux. Cependant, encore une fois, cette situation statique illustrée par la figure 2 est inobservable, d'une part, à cause de la présence du masque et, d'autre part, à cause de la difficulté d'observer les impacts des faisceaux immobiles. C'est pourquoi, toutes les méthodes connues décrites ci-dessus sont mises en œuvre avec balayage de l'écran au moyen d'une « mire » composée de lignes horizontales et verticales des trois couleurs. La composante horizontale d'écart de convergence entre deux couleurs différentes est la distance entre les lignes verticales de ces deux couleurs et la composante verticale d'écart de convergence est la distance entre les lignes horizontales correspondantes.

Pour bien comprendre la raison de la très grande précision du procédé de l'invention, il faut savoir que la densité électronique, en section transversale, d'un faisceau émis par l'un des canons a une répartition non uniforme, sensiblement gaussienne, ce qui implique un maximum de luminosité aux centres $C_R$, $C_V$ et $C_B$ des impacts sur l'écran du tube cathodique. Cette luminosité accrue au centre de l'impact de chaque faisceau est utilisable par voie de mesure photoélectrique, pour localiser ledit centre.

La figure 3 illustre une petite partie de l'écran du tube cathodique (vue de l'extérieur) avec un certain nombre de colonnes de luminophores 15 disposées sensiblement verticalement en considérant la position normale de visualisation du tube de télévision. Les couleurs correspondant aux différentes colonnes 15 sont indiquées à la partie supérieure de la figure 3 par des lettres B, V, R. Etant donné la présence du masque à l'arrière de l'écran, l'illumination des colonnes de luminophores fait apparaître de multiples images 18 des trous du masque (ces derniers ont une forme oblongue et ont leur plus grande dimension orientée suivant la direction des colonnes) par triplets 16 des trois couleurs, à cause des différences d'incidence des trois faisceaux (voir figure 1). Bien entendu, les colonnes de luminophores ont des compositions chimiques différentes pour correspondre aux trois couleurs fondamentales et elles sont disposées dans un ordre répétitif prédéterminé (Bleu, Vert, Rouge en les observant de l'extérieur du tube) et avec un pas p prédéterminé, en relation avec le pas de perforation du masque 11. Pour des raisons évidentes de résistance mécanique, les trous oblongs 12 du masque sont disposés en quinconce de sorte qu'il en est de même pour les triplets 16 correspondants. Cette particularité usuelle de tous les tubes à masque d'ombre et à trois canons en ligne est mise à profit dans le cadre de l'invention, pour déterminer les composantes verticales des écarts de convergence entre les faisceaux $F_R$, $F_V$ et $F_B$.

En effet, si on dispose arbitrairement, en regard d'une zone de l'écran où on désire déterminer les écarts de convergence, un écran opaque ou au moins dépoli muni d'une fente d'analyse 20 de largeur au moins égale à six pas p de luminophores (en fait, la largeur de la fente peut être multipliée par le rapport grossissant d'un système optique d'observation des colonnes de luminophores placé entre l'écran du tube cathodique et ladite fente) on est sûr qu'au moins un triplet 16 pourra être observé en partie, mais dans toute sa largeur, à travers la fente 20. Pour une bonne précision de la mesure, la seule contrainte est de placer l'écran de façon que la fente soit sensiblement parallèle à la direction de déviation horizontale du tube cathodique. En conséquence, les parties de luminophores visibles à travers la fente 20 ont toutes la même ordonnée en considérant le repérage de la figure 2, et on est certain que des colonnes de luminophores des trois couleurs sont visibles à travers la fente.

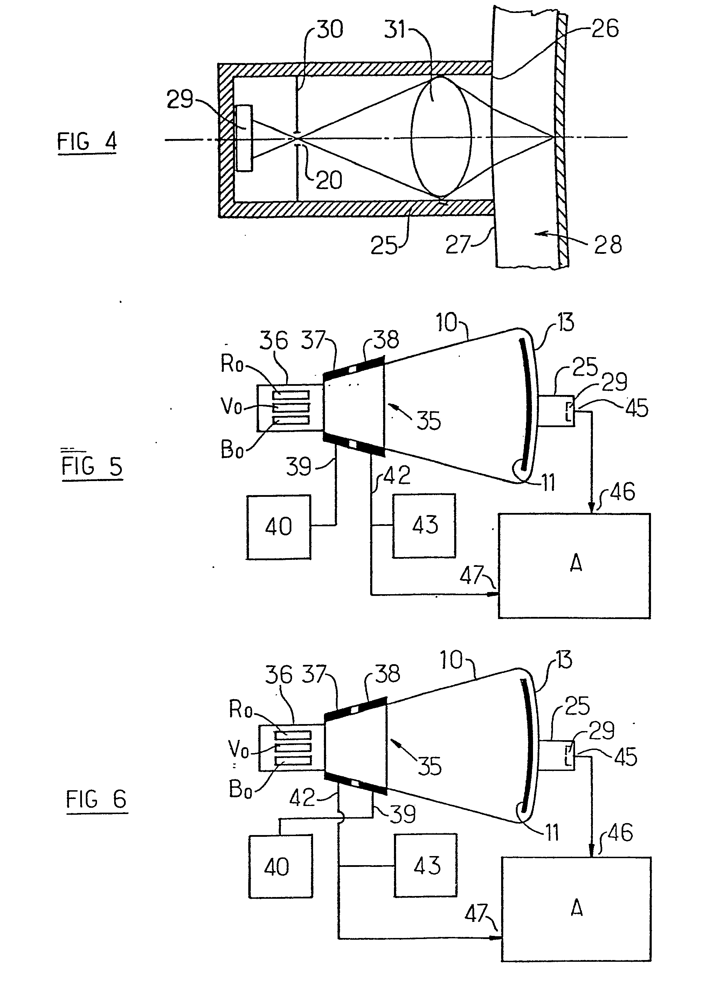

Le dispositif formant capteur permettant de concrétiser cette observation des triplets à travers la fente 20 est représenté schématiquement à la figure 4. Il comporte un boîtier 25 muni d'une ouverture 26 destinée à être positionnée contre la surface externe 27 du tube cathodique 28, en face d'une zone de cet écran pour laquelle on désire déterminer les caractéristiques de convergence des trois faisceaux. Une cellule photoélectrique 29 est placée au fond du boîtier 25 et l'écran opaque 30 précité est placé dans le boîtier 25 entre le capteur 29 et l'ouverture 26. Une lentille 31 (ou un système de lentilles) est également disposée dans le boîtier 21 entre l'ouverture 26 et l'écran opaque 30 de façon que la fente 20 portée par l'écran opaque 30 soit sensiblement placée dans un plan focal de la lentille 31. Par conséquent, le positionnement correct de la fente 20 est déterminé par celui du boîtier 25 en regard du tube cathodique.

La mise en œuvre du procédé de l'invention fait appel aux moyens de commande de balayage 35 du tube cathodique et à des générateurs de signaux de balayage extrêmement simples. En se reportant à la figure 5, l'installation de mesures a été sommairement schématisée. Le tube cathodique de télévision 10 est montré équipé de ses trois canons à électrons $R_0$, $V_0$ et $B_0$ disposés en ligne, c'est-à-dire parallèlement dans un même plan horizontal tandis que le déviateur 35 du tube est disposé autour du col 36 entre les trois canons et le masque 11. Le déviateur 35 est tout à fait classique, c'est-à-dire formé d'une bague de ferrite sur laquelle sont enroulés le bobinage de déflexion horizontale 37 et le bobinage de déflexion verticale 38. Le bobinage 37 est connecté (liaison 39) pour être alimenté par un générateur de balayage 40, normal, analogue à celui de tout poste de télévision tandis que le bobinage 38 est connecté (liaison 42) pour être alimenté par un générateur de tension lentement variable 43. Si l'un des canons $B_0$, $V_0$ ou $R_0$ est allumé, le résultat sur l'écran est une ligne horizontale (développée par le générateur 40) de la couleur correspondante, se déplaçant lentement (action du générateur 43) parallèlement à l'axe oy défini précédemment, c'est-à-dire pour la mesure considérée, l'axe de référence mentionné ci-dessus. Le boîtier 25 est positionné en regard d'une zone de l'écran 13 où l'on désire déterminer les caractéristiques de convergence de façon que la fente 20 précitée soit sensiblement parallèle à la direction du balayage horizontal commandé par le générateur 40 et la sortie 45 de la cellule photoélectrique 29 ainsi que la liaison 42 sont connectées à deux entrées de mesure 46, 47, respectivement, d'un analyseur A. Cet analyseur ne sera pas décrit en détail. On se bornera à indiquer que sa fonction essentielle est de prendre en compte, par exemple de mémoriser, la valeur du signal présent à l'entrée 47 lorsque le signal présent à l'entrée 46 passe par un maximum. Concrètement, cet analyseur peut être un micro-ordinateur programmé pour mémoriser point par point les variations dans le temps des signaux appliqués aux entrées 46 et 47, de façon à déterminer l'instant du maximum du signal appliqué à l'entrée 46 et pour repérer à ce même instant la valeur du signal à l'entrée 47. Le choix d'un tel micro-ordinateur ainsi que sa programmation sont à la portée d'un technicien compétent dans ce domaine de l'électronique. On terminera cette description de l'appareillage en indiquant que la composante alternative du signal délivré par le générateur 40 n'a pas besoin d'être d'une amplitude élevée pour balayer toute la largeur de l'écran, on peut se contenter d'une amplitude plus faible suffisante pour engendrer sur l'écran une ligne lumineuse du même ordre de grandeur que la fente 20.

L'appareillage qui vient d'être décrit permet la mise en œuvre du procédé. En effet, lorsque la ligne lumineuse horizontale créée sur l'écran passe en regard du boîtier 25 et plus particulièrement de la fente 20, les colonnes de luminophores correspondantes sont illuminées et la cellule photo-électrique 29 émet un signal de sortie maximum lorsque le centre ($C_R$, $C_B$ ou $C_V$) de l'impact du faisceau (lequel est découpé par le masque 11) passe au milieu de la fente d'analyse 20. Selon ce qui précède, le rôle de l'analyseur A est donc de mémoriser la valeur du courant dans le bobinage de déflexion verticale 38 à cet instant précis. L'opération est répétée pour chaque canon et les valeurs de courant mémorisées sont en général différentes. Comme on connaît d'autre part la sensibilité de déflexion verticale du tube, qui est sensiblement constante pour une large zone de l'écran, les trois valeurs de courant peuvent être converties en distances qui, retranchées deux à deux, ne représentent rien d'autre que les écarts entre les centres $C_V$, $C_B$ et $C_R$ (figure 2) en projection sur l'axe oy. Autrement dit, si on considère le cas particulier de la figure 2 dans lequel on prend arbitrairement pour référence du repère xoy la position du centre $C_V$, les écarts mentionnés ci-dessus donnent les valeurs des ordonnées $y_B$ et $y_R$ par les deux relations suivantes :

$$y_B = (I_{Bm} - I_{Vm})\, Sy \qquad \text{(a)}$$

$$y_R = (I_{Rm} - I_{Vm})\, Sy \qquad \text{(b)}$$

où $I_{Vm}$, $I_{Bm}$ et $I_{Rm}$ sont les trois valeurs de courant déterminées comme indiqué ci-dessus et où Sy est la sensibilité de déflexion verticale dans la zone de l'écran considérée.

L'idée de base de l'invention apparaît clairement à ce stade de la description. Au lieu de faire apparaître une mire sur l'écran comportant des lignes des trois couleurs fondamentales et d'observer visuellement et de façon incertaine les écarts en ordonnées entre les lignes visibles sur l'écran, on fixe arbitrairement une ordonnée dans la zone de mesure considérée (cette ordonnée est celle de la fente d'analyse 20) et on mesure le courant dans le bobinage de déflexion verticale nécessaire pour amener chaque faisceau dans une position telle que son impact ait lieu sur le tube cathodique à cette ordonnée arbitrairement choisie ; les différences entre les courants mesurés permettant de déterminer les composantes verticales (suivant l'axe oy) des écarts de convergence entre les trois faisceaux.

Pour la détermination des composantes horizontales, l'analyse est moins simple mais fait appel à un appareillage sensiblement identique à celui qui vient d'être décrit. Les seules différences résident dans les branchements inversés des bobinages de déflexion horizontale et verticale 37, 38 par rapport aux générateurs 40, 43 et dans l'agencement des moyens d'analyse à l'intérieur du boîtier 25. Ces différences sont apparentes sur la figure 6 où l'on voit que la liaison 39 est connectée au bobinage de déflexion horizontale 38, tandis que la liaison 42 est connectée au bobinage de déflexion verticale 37. Cette inversion des générateurs 40 et 43 aboutit à faire apparaître sur l'écran 13, lorsque l'un des canons est allumé, une ligne verticale de couleur correspondante se déplaçant lentement parallèlement à la direction de déflexion horizontale. Comme précédemment, il est donc nécessaire de déterminer arbitrairement une abscisse précise (puisque l'axe de référence est maintenant parallèle à l'axe de déflexion horizontale) pour tous les faisceaux, au moyen d'une fente d'analyse verticale. Cependant, si on se reporte à la figure 3, on voit que l'observation à travers une fente verticale qui serait analogue à la fente 20, placée en regard de l'écran, se heurte à la difficulté suivante si la fente est suffisamment fine pour concrétiser un point d'abscisse de mesure aussi précis que possible, on ne pourra guère observer qu'une seule couleur puisque les bandes de luminophores sont précisément disposées suivant la direction de déviation verticale.

Selon l'invention, on utilise des trous oblongs du masque pour former la fente d'analyse. Par ailleurs, la fente 20 décrite précédemment et située à l'extérieur du tube cathodique est maintenant remplacée par une fenêtre de sélection dont les dimensions satisfont à des critères différents qui seront expliqués plus loin. Partant de ce principe, plusieurs variantes de mise en œuvre du procédé sont possibles.

Selon une première variante, on choisit l'emplacement de la fenêtre de sélection $20_a$ pour que celle-ci soit placée le plus précisément possible en regard d'une colonne de luminophores correspondant à une couleur donnée. Dans ce cas, considérant à nouveau la figure 3, la fenêtre de sélection $20_a$ ne se distingue pas fondamentalement d'une fente d'analyse telle que décrite précédemment. Elle est portée par un écran opaque ou au moins translucide placé entre une lentille telle que 31 et une cellule photoélectrique telle que 29. La fenêtre $20_a$ est néanmoins orientée verticalement et sa hauteur non critique, est de préférence au moins égale à une hauteur d'image d'un trou de masque sur l'écran (multipliée éventuellement par le rapport grossissant de la lentille 21 ; c'est-à-dire que cette dimension de la hauteur d'image précitée est optiquement reportée dans le plan de l'écran opaque 30) tandis que sa largeur est faible, de l'ordre de grandeur d'un pas p d'une colonne de luminophores. Par exemple, si on commence l'analyse en allumant le canon bleu $B_0$, la fenêtre de sélection $20_a$ devra donc être placée en regard d'une colonne de luminophores correspondant au bleu, comme représenté sur la figure 3. Le positionnement étant correctement réalisé, on met en œuvre le procédé de la même façon que pour la détermination des projections des écarts de convergence sur l'axe oy et on mesure ainsi le courant dans le bobinage de déflexion horizontale correspondant au maximum d'intensité lumineuse perçue par la cellule photoélectrique 29. Puis, pour effectuer les mesures analogues concernant les deux autres couleurs, on peut déplacer la fenêtre $20_a$ à chaque mesure, de la valeur d'un pas p de façon que ladite fenêtre étroite $20_a$ se trouve toujours en regard d'une colonne de luminophores d'une couleur différente correspondant à la couleur du canon qui est allumé. Autrement dit, si on déplace deux fois la fenêtre $20_a$ vers la droite en considérant la figure 3, on pourra répéter la mesure en allumant successivement le canon vert $V_0$ et le canon rouge $R_0$. Cependant, le calcul des projections des écarts suivant l'axe ox devra tenir compte des décalages (un nombre entier de pas de colonne de luminophores) introduits dans les emplacements de mesures. A titre d'exemple, si on considère à nouveau le cas de la figure 2 en prenant arbitrairement pour référence le centre $C_V$ de l'impact de faisceau du vert comme origine du repère orthonormé xoy, on aura :

$$x_B = (I_{Bm} - I_{Vm})Sx - p \qquad (c)$$

$$x_R = (I_{Rm} - I_{Vm})Sx + p \qquad (d)$$

où $I_{Bm}$, $I_{Vm}$ et $I_{Rm}$ sont les valeurs de courant déterminées précédemment et $S_x$ est la sensibilité de déflexion horizontale dans la zone de l'écran considérée.

Ce procédé est précis mais nécessite un positionnement initial précis de la fenêtre de sélection qui peut demander un certain temps. La variante suivante évite ce positionnement précis.

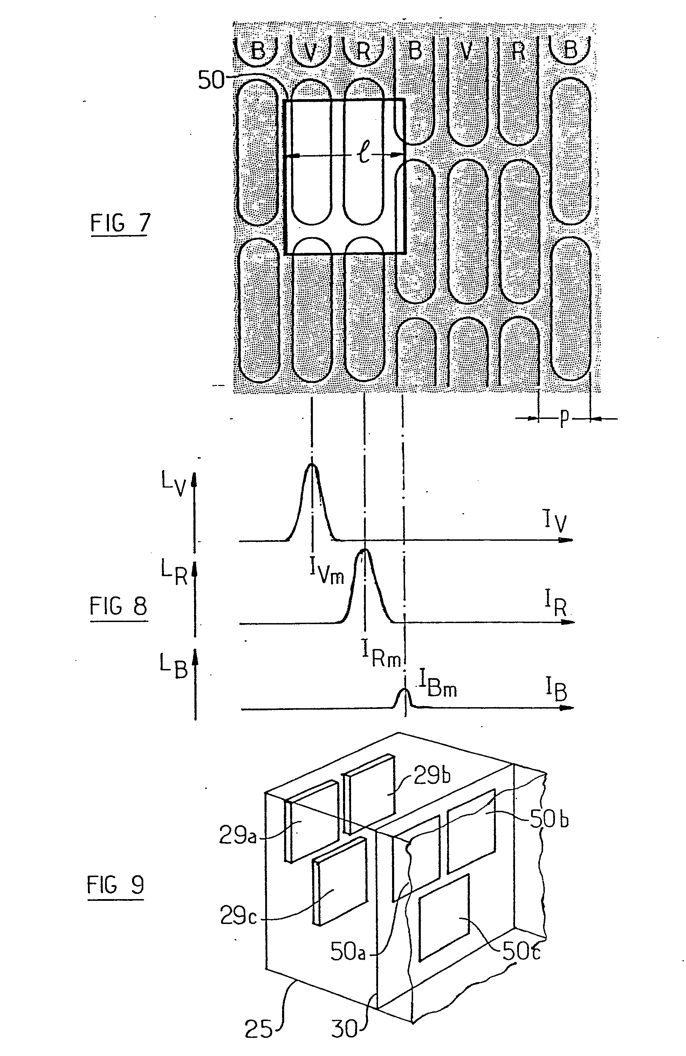

La seconde variante conserve toujours le principe d'analyse par fente matérialisée par les trous du masque du tube cathodique, mais la fenêtre d'analyse est plus large pour permettre de toujours observer de façon satisfaisante deux colonnes de luminophores voisines en plaçant arbitrairement le boîtier 25 contenant ladite fenêtre de sélection en regard de l'écran dans la zone considérée (sous réserve qu'il soit correctement orienté par rapport au repère orthonormé xoy) et sans avoir à déplacer ladite fenêtre d'analyse. On a représenté sur la figure 7 une telle fenêtre de sélection 50 placée en regard de l'écran. La largeur I de la fenêtre 50 est telle que :

$$2p < I < 3p$$

En fait, cette largeur est indiquée en supposant que le rapport grossissant de la lentille 31 est égal à 1. Si ce n'est pas le cas, la dimension est à multiplier par le rapport grossissant. Autrement dit, les dimensions des pas p sont optiquement reportées dans le plan de la fenêtre de sélection 50. On suppose que le positionnement arbitraire de cette fenêtre 50 a abouti à permettre l'observation à travers ladite fenêtre de deux colonnes de luminophores complètes (en largeur) respectivement une colonne verte et une colonne rouge et d'une partie d'une colonne de luminophores bleue. C'est le cas illustré à la figure 7. Pour la mesure, on procède comme précédemment en faisant successivement passer une ligne verticale, correspondant à chaque canon, se déplaçant lentement de la gauche vers la droite en considérant la figure 7, tout en mesurant simultanément le courant dans le bobinage de déflexion horizontale pour chaque point de mesure de l'intensité lumineuse perçue par la cellule photoélectrique 29. Le repérage du courant dans le bobinage de déflexion, pour lequel l'intensité lumineuse perçue est maximum, peut s'effectuer en temps réel en utilisant un algorithme approprié et si on dispose de moyens de calcul suffisants, intégrés ou associés à l'analyseur A. On peut aussi mettre en mémoire point par point, les valeurs d'intensité lumineuse perçues et les valeurs de courant correspondantes dans le bobinage de déflexion horizontale et appliquer ultérieurement un algorithme de détermination du maximum. La figure 8 illustre le résultat de ces mesures, c'est-à-dire l'intensité lumineuse $L_V$, $L_R$ et $L_B$ enregistrée par la cellule photoélectrique 29 au passage de chaque ligne lumineuse de couleur correspondante à travers la fenêtre 50, en fonction du courant $I_V$, $I_R$ ou $I_B$ correspondant dans le bobinage 37. Comme il fallait s'y attendre, l'intensité lumineuse enregistrée pour le faisceau du bleu est très inférieure aux intensités lumineuses enregistrées pour les faisceaux du vert et du rouge, lesquelles sont par ailleurs sensiblement égales au maximum possible puisque les colonnes de luminophores du vert et du rouge sont entièrement visibles en largeur dans la fenêtre 50. Dans de telles conditions, on élimine donc provisoirement le canon du bleu et le signal perçu correspondant qui ne peut servir à la détermination du véritable courant dans le bobinage 37 pour lequel le signal lumineux émis par la colonne du bleu est maximum. Cependant, cette série de mesures permet de calculer la projection de l'écart de convergence $x_R$ entre les canons du vert et du rouge, $V_0$ et $R_0$, ceci en appliquant la même formule (d) définie précédemment.

Pour la détermination de la projection de l'autre écart de convergence $x_B$ dans l'exemple décrit, il suffit de déplacer, éventuellement tout aussi arbitrairement, le boîtier 25 (c'est-à-dire la fenêtre 50) dans la même zone de l'écran où on désire déterminer les écarts de convergence et à recommencer les mesures décrites précédemment jusqu'à ce que, pour une série de mesures donnée le canon précédemment éliminé (le

canon $B_0$ dans l'exemple considéré) n'engendre plus le signal lumineux le plus faible. Lorsqu'on a trouvé une nouvelle position de la fenêtre 50 qui satisfait à cette condition, on peut alors déterminer la projection de l'écart de convergence entre le canon $B_0$ et celui des deux autres pour lequel on n'a pas enregistré le signal lumineux le plus faible. En reprenant les conventions définies plus haut, si cet autre canon est le canon du vert $V_0$, alors la formule (c) s'applique directement. Au contraire, si cet autre canon est le canon du rouge $R_0$, il n'est pas nécessaire de rechercher une autre position de la fenêtre 50 pour laquelle le bleu et le vert soient concernés. On détermine alors la projection de l'écart de convergence entre les canons $B_0$ et $R_0$, c'est-à-dire, vectoriellement : $\overrightarrow{x_B} + \overrightarrow{x_R}$. Or, $\overrightarrow{x_R}$ ayant été déterminé par la première série de mesures, on peut en déduire $\overrightarrow{x_B}$.

On notera que, suivant le positionnement initial de la fenêtre 50, les courbes représentées à la figure 8 pourront être d'amplitudes différentes. On observera toujours une courbe dont le maximum atteindra la valeur la plus élevée possible mais les deux autres pourront avoir des amplitudes maximum plus ou moins différentes et plus ou moins faibles ; le cas le plus défavorable (et très particulier) étant celui où la fenêtre 50 a été rigoureusement placée en regard de l'axe de symétrie d'une colonne de luminophores. Dans ce dernier cas, il est bon de ne pas tenir compte d'une telle série de mesures et de la recommencer pour une autre position, tout aussi arbitraire de la fenêtre. Pour tous les cas où une colonne de luminophores est presque entièrement visible à travers la fenêtre 50, on a vérifié que l'erreur de mesure introduite en prenant en compte le signal mesuré par la cellule photoélectrique 29 n'avait que peu de répercussions sur la détermination du maximum de luminosité perçue et sur la prise en compte de la valeur du courant $I_m$ correspondante. Cependant, le procédé qui vient d'être décrit implique de déplacer au moins une fois le boîtier 25 renfermant la fenêtre de sélection 50. La troisième variante qui va maintenant être décrite permet de s'affranchir de cette contrainte.

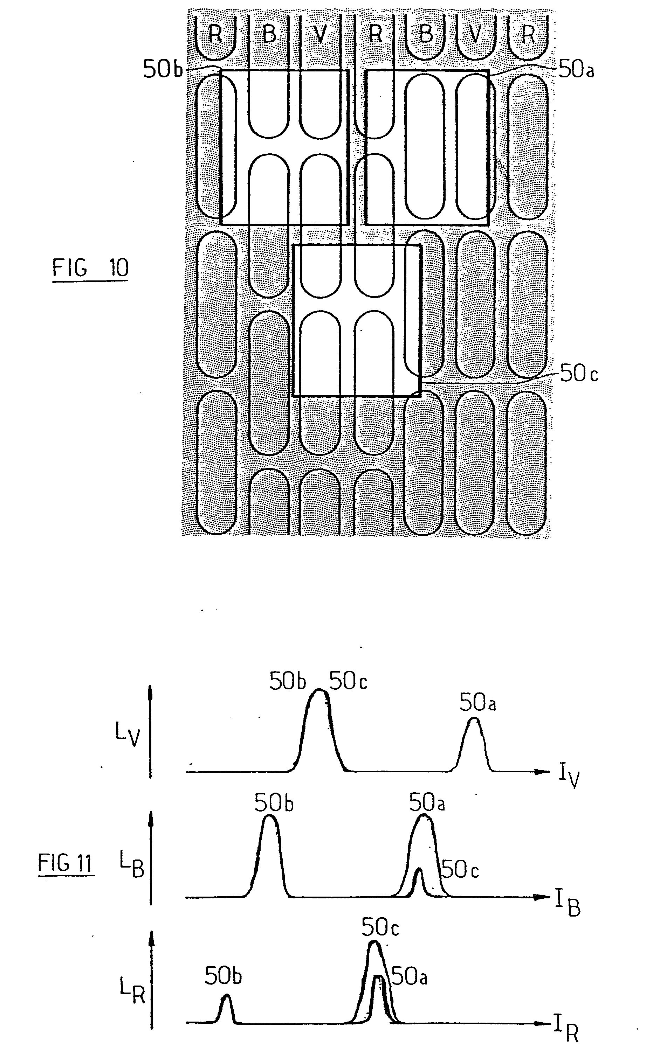

Pour la mise en œuvre de cette troisième variante, on utilise un dispositif formant capteur qui est légèrement modifié et représenté partiellement sur la figure 9, sans la lentille ou le système de lentilles 31 qui ne subit aucune modification. En revanche, l'écran opaque 30, toujours placé dans un plan focal de la lentille, comporte cette fois trois fenêtres de sélection 50a, 50b et 50c. Chacune de ces fenêtres est analogue à la fenêtre 50 décrite précédemment, c'est-à-dire avec une hauteur non critique au moins égale à une hauteur d'image d'un trou de masque sur l'écran et une largeur : $2p < l < 3p$ ; toujours en considérant les dimensions de la hauteur d'image et du pas p comme étant optiquement reportées dans le plan de l'écran opaque 30. D'autre part, les trois fenêtres de sélection sont agencées les unes par rapport aux autres de sorte que leurs centres soient disposés suivant un triangle isocèle. Trois cellules photoélectriques 29a, 29b et 29c analogues à la cellule 29 décrite précédemment et agencées de la même façon que les fenêtres, sont disposées à l'arrière de l'écran opaque 30, c'est-à-dire de l'autre côté de cet écran opaque par rapport au tube cathodique à analyser. La figure 10 montre une partie de l'écran du tube cathodique telle que visible à travers les fenêtres, lorsque le boîtier 25 est correctement positionné en regard de l'écran du tube cathodique, c'est-à-dire avec la largeur de chaque fenêtre positionnée sensiblement parallèlement à la direction de déflexion horizontale du tube cathodique. Le boîtier 25 contenant les trois fenêtres est arbitrairement positionné, avec une orientation néanmoins correcte, en regard de l'écran dans une zone considérée où on désire mesurer les composantes horizontales des écarts de convergence et les trois canons sont allumés les uns après les autres, comme précédemment, en appliquant aux bobinages de déflexion du tube le même courant que précédemment, engendrant sur l'écran une ligne verticale se déplaçant lentement dans une direction parallèle à l'axe ox. Selon une particularité importante de l'invention, l'analyse des résultats de l'observation du passage de la ligne lumineuse à travers les trois fenêtres, pour chaque canon, permet dans tous les cas de déterminer les projections horizontales des écarts de convergence entre ces trois canons, sans avoir à déplacer les fenêtres de sélection, donc le boîtier 25. Ces résultats sont résumés sur la figure 11, de façon analogue à la figure 8. Autrement dit, les trois passages des lignes de couleur différentes engendrent des signaux lus à travers les trois fenêtres de sélection par les cellules photoélectriques respectives et l'analyse de tous ces signaux donne toujours des informations suffisantes pour calculer les projections des écarts de convergence le long de l'axe ox. Ainsi, sur la figure 11, les intensités lumineuses $L_V$, $L_R$ et $L_B$ sont repérées en fonction des courants $I_V$, $I_B$ et $I_R$ dans le bobinage de déflexion horizontale et on indique également à travers quelles fenêtres ces signaux sont perçus, c'est-à-dire à partir de quelle cellule photoélectrique correspondante (29a, 29b ou 29c) ils sont engendrés. A titre d'exemple, dans le cas relativement favorable de la figure 10, il est possible de calculer la projection sur l'axe ox de l'écart de convergence entre les canons $B_0$ et $V_0$ par la seule analyse des signaux perçus à travers la fenêtre $50_B$, tandis qu'il est possible de calculer la projection sur l'axe ox de l'écart de convergence entre les canons $V_0$ et $R_0$ par la seule analyse des signaux perçus à travers la fenêtre 50c. La disposition des fenêtres et l'ordre invariable de succession des colonnes de luminophores permet de toujours reconnaître à quelle colonne de luminophores est dû tel ou tel signal lumineux perçu et donc d'appliquer les corrections appropriées d'un nombre entier de pas p, pour calculer les écarts. Par exemple, une colonne de luminophores observable à travers la fenêtre 50c l'est aussi au moins en partie à travers chacune des deux autres fenêtres. De façon générale, on peut vérifier que dans tous les cas :

— on est sûr de ne pas percevoir deux colonnes de luminophores de même couleur à travers la même fenêtre ; ceci à cause de la largeur de ladite fenêtre ;

— chaque fenêtre permet d'observer au moins une largeur entière de colonnes de luminophores ;

— les colonnes de luminophores de chacune des trois couleurs apparaissent au moins une fois à largeur entière dans l'ensemble des trois ouvertures ; et

— à une combinaison donnée des couleurs lue à travers chacune des fenêtres, correspond d'une façon univoque une position relative déterminée des colonnes de luminophores. Par conséquent, cette troisième variante permet, pour une position arbitraire du boîtier 25, de mesurer la position relative des lignes verticales des trois couleurs en effectuant de façon certaine la correction de position relative (un nombre entier de pas p) des colonnes de luminophores utilisées pour la mesure.

Bien entendu, l'invention n'est pas limitée aux différentes variantes du procédé qui vient d'être décrit ou au dispositif utilisable pour sa mise en œuvre. D'autres extensions sont possibles. Par exemple, il est parfaitement envisageable de placer simultanément plusieurs boîtiers 25 à la surface de l'écran du tube cathodique, en des points choisis, de façon à effectuer des mesures simultanées pour toutes les zones de l'écran. Les mesures ainsi obtenues peuvent être utilisées pour réaliser un réglage de convergence du tube, entièrement automatisé. C'est dire que l'invention couvre tous les équivalents techniques des moyens mis en jeu si ceux-ci le sont dans le cadre des revendications qui suivent.

En particulier, on peut imaginer de choisir l'axe de référence non parallèle à l'axe des deux directions orthogonales de balayage du tube cathodique. Dans ce cas, la fente d'analyse analogue à la fente 20 de la figure 3 pourrait être orientée en biais sur l'écran, mais de préférence toujours perpendiculairement à l'axe de référence choisi. Alors, les signaux appliqués aux bobinages de déflexion horizontale et verticale seraient par exemple constitués chacun d'au moins une composante d'un signal de balayage et d'une composante d'un signal lentement variable, et les calculs des écarts de convergence devraient tenir compte des deux sensibilités des bobinages de déflexion horizontale et verticale.

**Revendications** (pour les Etats contractants : DE, GB)

1. Procédé d'analyse de la convergence des trois faisceaux (FR, FV, FB) d'un tube cathodique couleur à trois canons en ligne muni d'un déviateur (35) à bobinages de déflexion respectivement horizontale et verticale, le procédé étant du genre où le signal lumineux émis par l'écran frappé par des électrons est capté par une cellule photosensible et où le courant traversant les bobines de déflexion est alors mesuré pour fournir une indication de position, caractérisé en ce qu'il consiste, le tube étant du type à masque d'ombre perforé de trous de préférence oblongs, pour déterminer la projection des écarts de convergence entre les trois faisceaux le long d'au moins un axe de référence, suivant une direction de déviation de préférence perpendiculaire à cet axe de référence, à allumer un seul des trois canons ($V_0$ ou $R_0$ ou $B_0$) et à appliquer un signal lentement variable à au moins un des bobinages de déflexion et un signal de balayage à au moins l'autre bobinage de déflexion, de façon à engendrer sur l'écran une ligne lumineuse se déplaçant lentement parallèlement audit axe de référence, à mesurer l'intensité lumineuse à travers une fente d'analyse (20 ou 12) situé parallèlement à la direction de la ligne lumineuse formée sur l'écran, à l'endroit où on désire déterminer les caractéristiques de convergence, à repérer les valeurs du courant dans lesdits bobinages lorsque l'intensité lumineuse perçue à travers ladite fente est maximum, à répéter les mêmes opérations pour les deux autres canons et à calculer lesdites projections ($xB$, $yB-xR$, $yR$) des écarts de convergence suivant ledit axe de référence, connaissant au moins les trois valeurs de courant précité et les sensibilités de déflexion du tube cathodique dans ladite zone de l'écran.

2. Procédé d'analyse selon la revendication 1 selon lequel on allume un seul des trois canons ($R_0$ ou $V_0$ ou $B_0$), caractérisé en ce qu'il consiste, pour déterminer la projection des écarts de convergence entre les trois faisceaux (FR, FV, FB) le long d'au moins un axe de référence, suivant la direction de déviation horizontale et/ou verticale et à appliquer un signal lentement variable au bobinage de déflexion correspondant audit axe de référence et un signal de balayage à l'autre bobinage de déflexion, de façon à engendrer sur l'écran une ligne lumineuse se déplaçant lentement parallèlement audit axe de référence, à mesurer l'intensité lumineuse à travers une fente d'analyse (20 ou 12) située parallèlement à la direction dudit balayage en une zone de l'écran où on désire déterminer les caractéristiques de convergence, à repérer la valeur du courant dans lesdits bobinages de déflexion correspondant audit axe de référence lorsque l'intensité lumineuse perçue à travers ladite fente est maximum, à répéter les mêmes opérations pour les deux autres canons et à calculer lesdites projections des écarts de convergence suivant ledit axe de référence, connaissant au moins les trois valeurs de courant précité et la sensibilité de déflexion du tube cathodique dans ladite zone de l'écran.

3. Procédé d'analyse selon la revendication 2, caractérisé en ce qu'on place ladite fente (20 ou 12) à l'extérieur du tube cathodique en regard de ladite zone de l'écran entre ce dernier et un transducteur photoélectrique.

4. Procédé d'analyse selon la revendication 2, caractérisé en ce que ledit axe de référence étant parallèle à la direction de déviation horizontale dudit tube cathodique, on matérialise ladite fente par au moins l'un des trous (12) précités dudit masque d'ombre précité situé dans ladite zone et qu'on observe des signaux lumineux par une fenêtre de sélection (50) que l'on place entre l'écran dudit tube cathodique et un transducteur photoélectrique (29).

5. Procédé d'analyse selon la revendication 4, appliqué à un tube cathodique dont l'écran comporte des colonnes de luminophores correspondant aux trois couleurs fondamentales disposées dans un ordre répétitif prédéterminé avec un pas prédéterminé, caractérisé en ce que, pour effectuer la mesure correspondant à l'un des canons, on dispose une fenêtre de sélection étroite (20a) en regard d'une colonne de luminophores correspondant au canon considéré, entre l'écran et un transducteur photoélectrique et en ce que, pour effectuer la mesure correspondant aux deux autres canons, on déplace chaque fois au moins ladite fenêtre de sélection de la distance dudit pas optiquement ramené dans le plan de ladite fenêtre et qu'on calcule lesdites projections desdits écarts de convergence entre les canons en corrigeant d'un nombre entier de pas, dépendant des positions relatives des colonnes de luminophores (B, V, R) sur lesquelles on a réalisé lesdites mesures, les distances déterminées connaissant les valeurs des courants précités et ladite sensibilité de déflexion horizontale du tube dans la zone précitée de l'écran.

6. Procédé d'analyse selon la revendication 4, appliqué à tube cathodique dont l'écran comporte des colonnes de luminophores aux trois couleurs fondamentales disposées dans un ordre répétitif prédéterminé, avec un pas prédéterminé, procédé selon lequel chaque canon est allumé à son tour et selon lequel une information de position du faisceau allumé sur l'écran est dérivée du courant de déflexion au maximum de l'intensité lumineuse perçue par un dispositif photosensible, caractérisé en ce qu'on dispose une fenêtre de sélection large (50) mais de largeur (1) inférieure à trois pas précités optiquement reportés dans le plan de ladite fenêtre, en un emplacement quelconque de l'écran dans ladite zone considérée, de façon que deux bandes de luminophores adjacentes soient visibles sensiblement entièrement dans leur largeur à travers ladite fenêtre, à mesurer les intensités lumineuses correspondant aux trois passages des bandes lumineuses obtenues successivement à partir des trois canons (R₀, V₀, B₀) en repérant à chaque fois le courant dans ledit déviateur correspondant au maximum d'intensité lumineuse perçue, puis, après avoir éliminé provisoirement le canon pour lequel le maximum d'intensité est le plus faible, à calculer la projection de l'écart de convergence entre les deux autres canons en corrigeant de la valeur d'un pas (P) précité la distance déterminée connaissant les deux valeurs de courant et la sensibilité de déflexion horizontale dans la zone considérée de l'écran, à déplacer éventuellement arbitrairement dans ladite zone considérée ladite fenêtre de sélection et à recommencer chaque fois les mesures successives desdites intensités lumineuses jusqu'à ce que, pour une série de mesures donnée, le canon précédemment éliminé n'engendre plus le signal lumineux le plus faible et à calculer alors de la même façon la projection de l'écart de convergence entre ce canon et celui des deux autres pour lequel on n'a pas enregistré le signal lumineux le plus faible.

7. Procédé d'analyse selon la revendication 4, appliqué à un tube cathodique dont l'écran comporte des colonnes de luminophores correspondant aux trois couleurs fondamentales disposées dans un ordre répétitif prédéterminé avec un pas prédéterminé, procédé selon lequel chaque canon est allumé à son tour et selon lequel une information de position du faisceau allumé sur l'écran est dérivée du courant de déflexion au maximum de l'intensité lumineuse perçue par un dispositif photosensible, caractérisé en ce qu'on dispose un agencement de trois fenêtres de sélection (50a, 50b, 50c) rectangulaires égales, de largeur (1) comprise entre deux et trois pas (p) précités optiquement reportés dans le plan de ladite fenêtre en regard d'un emplacement quelconque d'une zone de l'écran où la sensibilité de déflexion horizontale est connue, les centres desdites fenêtres étant de préférence disposés suivant les sommets d'un triangle isocèle, à engendrer successivement sur l'écran le passage desdites trois lignes lumineuses produites par chaque canon et à mesurer l'intensité lumineuse correspondante à travers chaque fenêtre en repérant pour chacune d'elle le courant dans le bobinage de déflexion correspondant à un maximum d'intensité lumineuse, à choisir dans les signaux mesurés recueillis à travers chaque fenêtre, au plus deux signaux engendrés par deux canons différents et pour lesquels le maximum d'intensité repérée est élevé et à calculer les projections des écarts de convergence entre les différents canons, en corrigeant d'un nombre approprié de pas les distances déterminées connaissant les valeurs de courant dans le déviateur correspondant aux intensités maximales respectives des signaux choisis et la sensibilité de déflexion horizontale dans la zone considérée.

8. Dispositif formant capteur pour l'analyse de la convergence des trois faisceaux d'un tube cathodique couleur à trois canons en ligne et à masque d'ombre perforé de trous de préférence oblongs, muni de deux moyens déviateurs (37, 38) respectivement horizontal et vertical et dont l'écran comporte des colonnes de luminophores (B, V, R) aux trois couleurs fondamentales disposées dans un ordre répétitif prédéterminé, pour la mise en œuvre du procédé selon l'une des revendications précédentes, caractérisé en ce qu'il comporte un boîtier (25) muni d'une ouverture destinée à être positionnée contre la surface externe de l'écran dudit tube cathodique en regard d'une zone de cet écran pour laquelle on désire déterminer les caractéristiques de convergence desdits canons, au moins une cellule photoélectrique (29) et au moins une fente d'analyse (20) ou fenêtre de sélection (20a, 50) positionnée entre ladite ouverture et ladite cellule photoélectrique.

9. Dispositif formant capteur selon la revendication 8, caractérisé en ce qu'une lentille (31) ou un système de lentille est disposé dans ledit boîtier (25) entre ladite ouverture et ladite fente (20) ou fenêtre de sélection et que cette dernière est placée sensiblement dans un plan focal de ladite lentille ou systèmes de lentilles.

10. Dispositif formant capteur selon la revendication 8 ou 9, caractérisé en ce que ladite fente (20) est sensiblement parallèle à la direction de déviation horizontale dudit tube cathodique, lorsque ledit boîtier est en position correcte en regard de l'écran dudit tube cathodique et en ce que cette fente a une largeur au moins égale à six pas (p) de luminophores optiquement reportés dans le plan de ladite fente.

11. Dispositif formant capteur selon la revendication 8 ou 9, pour la mise en œuvre du procédé selon la revendication 5, caractérisé en ce que ladite fenêtre de sélection (20a) est étroite et a sa plus grande dimension parallèle aux colonnes de luminophores précitées lorsque ledit boîtier est en position correcte en regard de l'écran dudit tube cathodique.

12. Dispositif formant capteur selon la revendication 8 ou 9, pour la mise en œuvre du procédé selon la revendication 6, caractérisé en ce que ladite fenêtre de sélection (50) est rectangulaire, que sa largeur est sensiblement parallèle à la direction de déflexion horizontale lorsque ledit boîtier est en position correcte en regard de l'écran et que ladite largeur (1) est comprise entre deux et trois pas (p) de colonnes de luminophores optiquement reportés dans le plan de ladite fenêtre de sélection.

13. Dispositif formant capteur selon la revendication 8 ou 9, pour la mise en œuvre du procédé selon la revendication 7, caractérisé en ce qu'il comporte trois fenêtres (50a, 50b, 50c) de sélection rectangulaires identiques et coplanaires dont les centres sont sensiblement disposés suivant les sommets d'un triangle isocèle, que la largeur (1) de chaque fenêtre est sensiblement parallèle à la direction de déflexion horizontale du tube cathodique lorsque ledit boîtier est en position correcte en regard de l'écran dudit tube cathodique, que ladite largeur (1) est comprise entre deux et trois pas (p) de colonnes de luminophores optiquement reportés dans le plan commun desdites fenêtres de sélection et que chaque fenêtre est disposée entre une ouverture précitée et un transducteur photoélectrique (29a, 29b, 29c) respectif.

## Revendications (pour l'Etat contractant NL)

1. Procédé d'analyse de la convergence des trois faisceaux (FR, FV, FB) d'un tube cathodique couleur à trois canons en ligne et à masque d'ombre perforé de trous de préférence oblongs, muni d'un déviateur (35) à bobinages de déflexion respectivement horizontale et verticale, caractérisé en ce qu'il consiste, pour déterminer la projection des écarts de convergence entre les trois faisceaux le long d'au moins un axe de référence, suivant une direction de déviation de préférence perpendiculaire à cet axe de référence, à allumer un seul des trois canons ($V_0$ ou $R_0$ ou $B_0$) et à appliquer un signal lentement variable à au moins un des bobinages de déflexion et un signal de balayage à au moins l'autre bobinage de déflexion, de façon à engendrer sur l'écran une ligne lumineuse se déplaçant lentement parallèlement audit axe de référence, à mesurer l'intensité lumineuse à travers une fente d'analyse (20 ou 12) située parallèlement à la direction de la ligne lumineuse formée sur l'écran, à l'endroit où on désire déterminer les caractéristiques de convergence, à repérer les valeurs du courant dans lesdits bobinages lorsque l'intensité lumineuse perçue à travers ladite fente est maximum, à répéter les mêmes opérations pour les deux autres canons et à calculer lesdites projections (xB, yB-xR, yR) des écarts de convergence suivant ledit axe de référence, connaissant au moins les trois valeurs de courant précité et les sensibilités de déflexion du tube cathodique dans ladite zone de l'écran.

2. Procédé d'analyse selon la revendication 1, caractérisé en ce qu'il consiste, pour déterminer la projection des écarts de convergence entre les trois faisceaux (FR, FV, FB) le long d'au moins un axe de référence, suivant la direction de déviation horizontale et/ou verticale, à allumer un seul des trois canons ($V_0$ ou $R_0$ ou $B_0$) et à appliquer un signal lentement variable au bobinage de déflexion correspondant audit axe de référence et un signal de balayage à l'autre bobinage de déflexion, de façon à engendrer sur l'écran une ligne lumineuse se déplaçant lentement parallèlement audit axe de référence, à mesurer l'intensité lumineuse à travers une fente d'analyse (20 ou 12) située parallèlement à la direction dudit balayage en une zone de l'écran où on désire déterminer les caractéristiques de convergence, à repérer la valeur du courant dans lesdits bobinages de déflexion correspondant audit axe de référence lorsque l'intensité lumineuse perçue à travers ladite fente est maximum, à répéter les mêmes opérations pour les deux autres canons et à calculer lesdites projections des écarts de convergence suivant ledit axe de référence, connaissant au moins les trois valeurs de courant précité et la sensibilité de déflexion du tube cathodique dans ladite zone de l'écran.

3. Procédé d'analyse selon la revendication 2, caractérisé en ce qu'on place ladite fente (20 ou 12) à l'extérieur du tube cathodique en regard de ladite zone de l'écran entre ce dernier et un transducteur photoélectrique.

4. Procédé d'analyse selon la revendication 2, caractérisé en ce que ledit axe de référence étant parallèle à la direction de déviation horizontale dudit tube cathodique, on matérialise ladite fente par au moins l'un des trous (12) précités dudit masque d'ombre précité situé dans ladite zone et qu'on observe des signaux lumineux par une fenêtre de sélection (50) que l'on place entre l'écran dudit tube cathodique et un transducteur photoélectrique (29).

5. Procédé d'analyse selon la revendication 4, appliqué à un tube cathodique dont l'écran comporte des colonnes de luminophores correspondant aux trois couleurs fondamentales disposées dans un ordre répétitif prédéterminé avec un pas prédéterminé, caractérisé en ce que, pour effectuer la mesure correspondant à l'un des canons, on dispose une fenêtre de sélection étroite (20a) en regard d'une colonne de luminophores correspondant au canon considéré, entre l'écran et un transducteur photoélectrique et en ce que, pour effectuer la mesure correspondant aux deux autres canons, on déplace chaque fois au moins ladite fenêtre de sélection de la distance dudit pas optiquement ramené dans le plan de ladite fenêtre et qu'on calcule lesdites projections desdits écarts de convergence entre les canons en corrigeant d'un nombre entier de pas, dépendant des positions relatives des colonnes de luminophores (B, V, R) sur lesquelles on a réalisé lesdites mesures, les distances déterminées connaissant les valeurs des courants précités et ladite sensibilité de déflexion horizontale du tube dans la zone précitée de l'écran.

6. Procédé d'analyse selon la revendication 4, appliqué à un tube cathodique dont l'écran comporte des colonnes de luminophores aux trois couleurs fondamentales disposées dans un ordre répétitif prédéterminé, avec un pas prédéterminé, caractérisé en ce qu'on dispose une fenêtre de sélection large (50) mais de largeur (1) inférieure à trois pas précités optiquement reportés dans le plan de ladite fenêtre, en un emplacement quelconque de l'écran dans ladite zone considérée, de façon que deux bandes de luminophores adjacentes soient visibles sensiblement entièrement dans leur largeur à travers ladite fenêtre, à mesurer les intensités lumineuses correspondant aux trois passages des bandes lumineuses obtenues successivement à partir des trois canons ($R_0$, $V_0$, $B_0$) en repérant à chaque fois le courant dans ledit déviateur correspondant au maximum d'intensité lumineuse perçue, puis, après avoir éliminé provisoirement le canon pour lequel le maximum d'intensité est le plus faible, à calculer la projection de l'écart de convergence entre les deux autres canons en corrigeant de la valeur d'un pas (P) précité la distance déterminée connaissant les deux valeurs de courant et la sensibilité de déflexion horizontale dans la zone considérée de l'écran, à déplacer éventuellement arbitrairement dans ladite zone considérée ladite fenêtre de sélection et à recommencer chaque fois les mesures successives desdites intensités lumineuses jusqu'à ce que, pour une série de mesures donnée, le canon précédemment éliminé n'engendre plus le signal lumineux le plus faible et à calculer alors de la même façon la projection de l'écart de convergence entre ce canon et celui des deux autres pour lequel on n'a pas enregistré le signal lumineux le plus faible.

7. Procédé d'analyse selon la revendication 4, appliqué à un tube cathodique dont l'écran comporte des colonnes de luminophores correspondant aux trois couleurs fondamentales disposées dans un ordre répétitif prédéterminé avec un pas prédéterminé, caractérisé en ce qu'on dispose un agencement de trois fenêtres de sélection (50a, 50b, 50c) rectangulaires égales, de largeur (1) comprise entre deux et trois pas (p) précités optiquement reportés dans le plan de ladite fenêtre en regard d'un emplacement quelconque d'une zone de l'écran où la sensibilité de déflexion horizontale est connue, les centres desdites fenêtres étant de préférence disposés suivant les sommets d'un triangle isocèle, à engendrer successivement sur l'écran le passage desdites trois lignes lumineuses produites par chaque canon et à mesurer l'intensité lumineuse correspondante à travers chaque fenêtre en repérant pour chacune d'elle le courant dans le bobinage de déflexion correspondant à un maximum d'intensité lumineuse, à choisir dans les signaux mesurés recueillis à travers chaque fenêtre, au plus deux signaux engendrés par deux canons différents et pour lesquels le maximum d'intensité repérée est élevé et à calculer les projections des écarts de convergence entre les différents canons, en corrigeant d'un nombre approprié de pas les distances déterminées connaissant les valeurs de courant dans le déviateur correspondant aux intensités maximales respectives des signaux choisis et la sensibilité de déflexion horizontale dans la zone considérée.

8. Dispositif formant capteur pour l'analyse de la convergence des trois faisceaux d'un tube cathodique couleur à trois canons en ligne et à masque d'ombre perforé de trous de préférence oblongs, muni de deux moyens déviateurs (37, 38) respectivement horizontal et vertical et dont l'écran comporte des colonnes de luminophores (B, V, R) aux trois couleurs fondamentales disposées dans un ordre répétitif prédéterminé, pour la mise en œuvre du procédé selon l'une des revendications précédentes, caractérisé en ce qu'il comporte un boîtier (25) muni d'une ouverture destinée à être positionnée contre la surface externe de l'écran dudit tube cathodique en regard d'une zone de cet écran pour laquelle on désire déterminer les caractéristiques de convergence desdits canons, au moins une cellule photoélectrique (29) et au moins une fente d'analyse (20) ou fenêtre de sélection (20a, ⁵⁰) positionnée entre ladite ouverture et ladite cellule photoélectrique.

9. Dispositif formant capteur selon la revendication 8, caractérisé en ce qu'une lentille (31) ou un système de lentille est disposé dans ledit boîtier (25) entre ladite ouverture et ladite fente (20) ou fenêtre de sélection et que cette dernière est placée sensiblement dans un plan focal de ladite lentille ou systèmes de lentilles.

10. Dispositif formant capteur selon la revendication 8 ou 9, caractérisé en ce que ladite fente (20) est sensiblement parallèle à la direction de déviation horizontale dudit tube cathodique, lorsque ledit boîtier est en position correcte en regard de l'écran dudit tube cathodique et en ce que cette fente a une largeur au moins égale à six pas (p) de luminophores optiquement reportés dans le plan de ladite fente.

11. Dispositif formant capteur selon la revendication 8 ou 9, pour la mise en œuvre du procédé selon la revendication 5, caractérisé en ce que ladite fenêtre de sélection (20a) est étroite et a sa plus grande dimension parallèle aux colonnes de luminophores précitées lorsque ledit boîtier est en position correcte en regard de l'écran dudit tube cathodique.

12. Dispositif formant capteur selon la revendication 8 ou 9, pour la mise en œuvre du procédé selon la revendication 6, caractérisé en ce que ladite fenêtre de sélection (50) est rectangulaire, que sa largeur est sensiblement parallèle à la direction de déflexion horizontale lorsque ledit boîtier est en position correcte en regard de l'écran et que ladite largeur (1) est comprise entre deux et trois pas (p) de colonnes de luminophores optiquement reportés dans le plan de ladite fenêtre de sélection.

13. Dispositif formant capteur selon la revendication 8 ou 9, pour la mise en œuvre du procédé selon la revendication 7, caractérisé en ce qu'il comporte trois fenêtres (50a, 50b, 50c) de sélection rectangulaires identiques et coplanaires dont les centres sont sensiblement disposés suivant les sommets d'un triangle isocèle, que la largeur (1) de chaque fenêtre est sensiblement parallèle à la direction de déflexion horizontale du tube cathodique lorsque ledit boîtier est en position correcte en regard de l'écran dudit tube cathodique, que ladite largeur (1) est comprise entre deux et trois pas (p) de colonnes de luminophores optiquement reportés dans le plan commun desdites fenêtres de sélection et que chaque fenêtre est disposée entre une ouverture précitée et un transducteur photoélectrique (29a, 29b, 29c) respectif.

**Claims** (for the Contracting States : DE and GB)

1. Method of analyzing the convergence of the three beams (FR, FV, FB) of a polychrome cathode-ray tube having three in-line guns and a deflecting unit (35) having horizontal and vertical deflecting coils, the method being of the type in which the light signal emitted by the screen struck by the electrons is received by a photosensitive cell and in which the current flowing through the deflecting coils is then measured to furnish a position indication, characterized in that it consists in, for a tube of the shadow-mask type having preferably elongated holes, for determining the projection of the convergence deviations between the three beams along at least one reference axis and in a deflection direction preferably perpendicular to said reference axis, operating only one of the three guns ($V_0$ or $R_0$ or $B_0$) and applying a slowly variable signal to at least one of the deflecting coils and a scanning signal to at least the other deflecting coil so that on the screen a light line is generated which is displaced slowly parallel to the reference axis, measuring the light intensity through an analysis slot (20 or 12) situated parallel to the direction of the light line formed on the screen at the point where the convergence characteristic is to be determined, determining the values of the current flowing in the coils when the light intensity perceived through said slot is a maximum, repeating the same operations for the two other guns and calculating said projections (xB, yB-xR, yR) of the convergence deviations along the reference axis, knowing at least the three values of the aforementioned current and the deflection sensitivities of the cathode-ray tube in said zone of the screen.

2. Analysis method according to claim 1 in which only one of the three guns ($R_0$ or $V_0$ or $B_0$) is set in operation, characterized in that it consists for determining the projection of the convergence deviations between the three beams (FR, FV, FB) along at least one reference axis in the horizontal and/or vertical deflection direction, in applying a slowly variable signal to the deflecting coil corresponding to said reference axis and a scanning signal to the other deflecting coil so as to generate on the screen a light line which is displaced slowly parallel to said reference axis, measuring the light intensity through an analysis slot (20 or 12) situated parallel to the direction of said deflection in a zone of the screen where the convergence characteristics are to be determined, determining the value of the current in said deflecting coils corresponding to said reference axis when the light intensity perceived through said slot is a maximum, repeating the same operations for the two other guns and calculating said projections of the convergence deviations along said reference axis, knowing at least the three values of the aforementioned current and the deflection sensitivity of the cathode-ray tube in said zone of the screen.

3. Analysis method according to claim 2, characterized in that said slot (20 or 12) is located outside the cathode-ray tube opposite said zone of the screen between the latter and a photoelectric transducer.

4. Analysis method according to claim 2, characterized in that said reference axis is parallel to the horizontal deflection direction of the cathode-ray tube and said slot is formed by at least one of said holes (12) of said shadow mask situated in said zone and the light signals are observed through the selection window (50) which is disposed between the screen of said cathode-ray tube and a photoelectric transducer (29).

5. Analysis method according to claim 4 applied to a cathode-ray tube of which the screen comprises columns (B, V, R) of phosphors corresponding to the three primary colors disposed in a predetermined repetitive order with predetermined pitch characterized in that to carry out the measurement corresponding to one of the guns a narrow selection window (20a) is disposed opposite a phosphor column corresponding to the respective gun between the screen and a photoelectric transducer and that to carry out the measurement corresponding to the other two guns in each case at least said selection window is displaced a distance corresponding to said pitch optically moved into the plane of the window, and that said projections of the convergence deviations between the guns are calculated in that the distances determined are corrected by a whole number of pitches depending on the relative positions of the phosphor columns (B, V, R) on which said measurements were made, the values of the aforementioned currents and said horizontal deflection sensitivity of the tube in said zone of the screen being known.

6. Analysis method according to claim 4 applied to a cathode-ray tube whose screen comprises phosphor columns with the three primary colors disposed in a predetermined repetitive order with predetermined pitch, according to which method each gun is brought into operation successively and according to which a position information on the beam showing on the screen is derived from the deflecting current at the maximum light intensity perceived by a photosensitive device, characterized in that a wide selection window (50) whose width (1) is however less than three said pitches optically displaced into the plane of said window is disposed at any desired location of the screen in the zone considered in such a manner that two adjacent phosphor strips are visible substantially over the entire width through said window, that the light intensities are measured corresponding to the three passages of the luminous strips obtained successively from the three guns ($R_0$, $V_0$, $B_0$) by determining each time the current in said deflecting unit corresponding to the maximum perceived light intensity, and then, after having provisionally eliminated the gun for which the intensity maximum is the weakest, the projection of the convergence deviation between the two other guns is calculated, correcting by the value of one of said pitches (P) the distance determined, the two current values and the horizontal deflection sensibility in the zone of the screen considered being known, in said considered zone said selection window is possibly arbitrarily displaced and each time the successive measurements of said light intensities is recommenced until for a given series of measurements the previously eliminated gun no longer generates the weakest light signal, and then in the same manner the projection of the convergence deviation between said gun and that of the other two guns for which the weakest light signal was not found is calculated.

7. Analysis method according to claim 4 applied to a cathode-ray tube whose screen comprises phosphor columns corresponding to the three primary colors and disposed in a predetermined repetitive order having a predetermined pitch, according to which method each gun is brought into operation successively and according to which a positive information on the beam showing on the screen is derived from the deflection current at the maximum of the light intensity perceived by a photosensitive device, characterized in that an arrangement of three rectangular equal selection windows (50a, 50b, 50c) of whidth (1) between two and three of said pitches (p) displaced optically into the plane of the window is arranged opposite any desired location of a zone of the screen where the horizontal deflection sensitivity is known, the centers of said windows preferably disposed according to the apices of an isosceles triangle, generating successively on the screen the passage of said three light lines produced by each gun and measuring the corresponding light intensity through each window, determining for each of them the current in the deflecting coil corresponding to a maximum of the light intensity, selecting from the measured signals obtained through the windows at most two signals generated by two different guns and for which the intensity maximum found is high, and calculating the projections of the convergence deviations between the different guns, correcting the distances determined by a suitable number of pitches, the values of the current in the deflecting unit corresponding to the respective maximum intensities of the selected signals and the horizontal deflection sensitivity in the zone considered being known.

8. Device forming a pickup for the analysis of the convergence of three beams of a polychrome cathode-ray tube having three in-line guns and shadow mask having preferably elongated holes, equipped with two deflecting means (37, 38), a horizontal and a vertical, of which the screen comprises phosphor columns (B, V, R) in the three primary colors disposed in predetermined repetitive order, for carrying out the method according to one of the preceding claims, characterized in that it comprises a housing (25) equipped with an opening adapted to be positioned against the outer surface of the screen of said cathode-ray tube opposite a zone of said screen for which the convergence characteristics of said guns are to be determined, at least one photoelectric cell (29) and at least one analysis slot (20) or selection window (20a, 50) situated between said opening and said photoelectric cell.

9. Device forming a pickup according to claim 8, characterized in that a lens (31) or lens system is disposed in said housing (25) between said opening and said slot (20) or selection window and that the latter is disposed substantially in a focal plane of said lens or lens systems.

10. Device forming a pickup according to claim 8 or 9, characterized in that said slot (20) is substantially parallel to the horizontal deflection direction of said cathode-ray tube when said housing is in correct position opposite the screen of the cathode-ray tube and that said slot has a width at least equal to six pitches (p) of the phosphors displaced optically into the plane of the slot.

11. Device forming a pickup according to claim 8 or 9 for carrying out the method according to claim 5, characterized in that said selection window (20a) is narrow and its greatest dimension is parallel to said phosphor columns when said housing is in correct position opposite the screen of said cathode-ray tube.

12. Device forming a pickup according to claim 8 or 9 for carrying out the method according to claim 6, characterized in that said selection window (50) is rectangular, that its width is substantially parallel to the direction of horizontal deflection when said housing is in correct position opposite the screen and that said width (1) is between two and three pitches (p) of the phosphor columns optically displaced into the plane of the selection window.

13. Device forming a pickup according to claim 8 or 9 for carrying out the method according to claim 7, characterized in that it comprises three rectangular identical coplanar selection windows (50a, 50b, 50c) of which the centers are disposed substantially in accordance with the apices of an isosceles triangle, that the width (1) of each window is substantially parallel to the direction of horizontal deflection of the cathode-ray tube when said housing is in correct position opposite the screen of said cathode-ray tube, that said width (1) is between two and three pitches (p) of the phosphor columns optically displaced into the common plane of the selection windows and that each window is disposed between a said opening and a corresponding photoelectric transducer (29a, 29b, 29c).

**Claims** (for the Contracting State NL)

1. Analysis process of the convergence of three beams (FR, FV, FB) of a colour cathode tube with three guns in a line and a shadow mask perforated by preferably oblong holes, equipped with a deflector having respectively, horizontal and vertical deflector coils, characterized in that it consists, in order to determine the projection of the convergency deviations between the three beams along the length of at least one reference axis, along a deflection direction that is preferably perpendicular to this reference axis, in switching on only one of the three guns ($V_0$ or $R_0$ or $B_0$) and in applying a slowly variable signal to at least one of the deflector coils and a scanning signal to at least one of the deflector coils and a scanning signal to at least the other deflector coils, so as to generate on the screen a light line being displaced slowly in a parallel direction to the said reference axis, in measuring the intensity of light through an analysis slit (20 or 12) located parallelwise to the direction of the light line formed on the screen, at the site where it is required to determine the convergence characteristics, in determinating the values of the current in the said coils when the light intensity perceived through the said slit is maximum, in repeating the same operations for the two other guns and in calculating the said projections (xB, yB-xR, yR) of the convergency deviations along the said reference axis, while at least three values of the above-mentioned current and the deflection sensitivities of the cathode tube in the said zone of the screen are known.

2. Analysis process according to claim 1, characterized in that it consists, in order to determine the projection of the convergency deviations between the three beams (FR, FV, FB) along the length of at least one reference axis, along the direction of horizontal and/or vertical deflection, in switching on only one of the three guns ($V_0$ or $R_0$ or $B_0$) and in applying a slowly variable signal to the deflection coil corresponding to the said reference axis and a scanning signal to the other deflection coil, in such a way as to generate on the screen a light line being displaced slowly in a parallel direction to the said reference axis, in measuring the intensity of light through an analysis slit (20 or 12) located parallel to the direction of the said scanning in a zone of the screen where it is required to determine the convergency characteristics, in determinating the value of the current in the said deflection coils corresponding to the said reference axis when the intensity of light perceived through the said slit is maximum, in repeating the same operations for the two other guns and in calculating the said projections of the convergency deviations along the same reference axis, while at least the three values of the above-mentioned current and deflection sensitivity of the cathode tube in the said zone of the screen are known.

3. Analysis process according to claim 2, characterized in that the said slit (20 or 12) is located inside the cathode tube opposite facing the said zone of the screen between this latter and a photoelectric transducer.

4. Analysis process according to claim 2, characterized in that the said reference axis being parallel to the horizontal direction of the said cathode tube, the said slit is materialized by at least one of the above-mentioned holes (12) of the said above-mentioned shadow mask located in the said zone and the light signals are observed through a selection window 50 that is placed between the screen of the said cathode tube and a photoelectric transducer.

5. Analysis process according to claim 4, applied to a cathode tube the screen of which comprises luminiferous columns corresponding to the three primary colours disposed in a repetitive order predetermined with a predetermined pitch or interval, characterized in that, to make the measure corresponding to one of the guns, a narrow selection window (20a) is disposed opposite a luminiferous column corresponding to the gun involved, between the screen and a photoelectric transducer and in that, to make the measurement corresponding to the two other guns, the said selection window is displaced each time at least from the distance of the said pitch optically brought into the plane of the said window and the said projections of the said convergency variations between the guns are calculated by correcting by an integer of pitches, depending on the relative positions of the luminiferous column (B, V, R) on which are realized the said measurements, the distance, the values of the above-mentioned currents and the said sensitivity of horizontal deflection of the tube in the above-mentioned zone of the screen being known.

6. Analysis process according to claim 4, applied to a cathode tube of which the screen comprises luminiferous columns of the three primary colours disposed in a predetermined repetitive order, with a predetermined pitch, characterized in that is disposed a wide selection window (50) of width (1) smaller than three above-mentioned pitches optically brought into the plane of the said window, by any location of the screen in the said zone involved, so that the two adjacent luminiferous bands are visible substantially whole in their width through the said window, by measuring the intensities of light corresponding to the three passages of the light strips successively obtained from the three guns ($R_0$, $V_0$, $B_0$) by determinating at each time the current in the said deflector corresponding to the maximum intensity of light perceived, then, after having eliminated provisionally the gun for which the maximum intensity is the weakest, by calculating the projection of the convergency variation between the two other guns by correcting from the value of one above-mentioned pitch (P) the determined distance, the two values of current and the sensitivity of horizontal deflection in the involved zone of the screen being known, in eventually displacing arbitrarily in the said involved zone the said selection window and in starting again each time successive measurements of the said intensities of light until, for a given series of measurements, the previously eliminated gun no longer generates the weakest light signal and in thus calculating in the same way the projection of the convergency variation between this gun and that of the two others for which the weakest light signal has not been registered.

7. Analysis process according to claim 4, applied to a cathode tube the screen of which comprises columns of luminiferous materials corresponding to the three primary colours disposed in a predetermined repetitive order with a predetermined interval, characterized in that an arrangement of three rectangular selection windows (50a, 50b, 50), of width (1) comprised between two and three above-mentioned pitches (P) optically brought into the plane of the said window opposite any location of a zone of the screen where the sensitivity of horizontal deflection is known, the centres of the said windows being preferably disposed according to the apexes of an isoceles triangle, to generate successively on the screen the passage of the said three light lines produced by each gun and by measuring the corresponding intensity of light through each window by determinating for each of them the current in the deflection coil corresponding to a maximum intensity of light, in selecting in the measured signals collected through each window, at the most two signals generated by two different guns and for which the maximum determined intensity is high and in calculating the projections of the convergency variations between the different guns, by correcting by an appropriate number of pitches the determined distances, the values of current in the deflector corresponding to the respective maximal intensities of the signals chosen and the sensitivity of horizontal deflection in the zone involved being known.

8. Device forming a collector for the analysis of the convergence of the three beams of a colour cathode tube having three guns in line and a shadow mask perforated by three, preferably oblong, holes provided with two deflector means (37, 38) respectively horizontal and vertical and of which the screen comprises luminiferous columns (B, V, R) of the three primary colours disposed in a predetermined repetitive order, for operating the process according to one of the preceding claims, characterized in that it comprises a housing (25) provided with an opening intended to be positioned against the external surface of the screen of the said cathode tube opposite a zone of this screen for which it is required to determine the convergency characteristics of the said guns, at least one photoelectric cell (29) and at least one analysis slit (20) or selection window (20a, 50) positioned between the said opening and the said photoelectric cell.

9. Device forming collector according to claim 8, characterized in that a lens (31) or a lens system is disposed in the said housing (25) between the said opening and the said slit (20) or selection window and that latter is placed substantially in a focal plane of the said lens or lens system.

10. Device forming collector according to claim 8 or 9, characterized in that the said slit (20) is substantially parallel to the direction of horizontal deflection of the cathode tube, when the said housing is in correction position opposite the screen of the cathode tube and in that this slit has a width at least equal to six pitches (P) of luminiferous columns optically brought into the plane of the said slit.

11. Device forming collector according to claim 8 or 9, for the operating of the process according to claim 5, characterized in that the said selection window (20a) is narrow and has its greatest dimension parallel to the above-mentioned luminiferous column when the said housing is in correct position opposite the screen of the said cathode tube.

12. Device forming collector according to claim 8 or 9, for operating the process according to claim 6, characterized in that the said selection window (50) is rectangular, that its width is substantially parallel to the direction of horizontal deflection when the said housing is in the correct position opposite the screen and that the said width (1) is comprised between two and three pitches (P) of luminiferous columns optically brought into the plane of the said selection window.

13. Device forming collector according to claim 8 or 9, for operating the process according to claim 7, characterized in that it comprises three identical and coplanar rectangular selection windows (50a, 50b, 50c) the centres of which are substantially disposed along the apex of an isoceles triangle, that the width (1) of each window is substantially parallel to the direction of horizontal deflection of the cathode tube when the said housing is in correct position opposite facing the screen of the said cathode tube, that the said width (1) is comprised between two and three pitches (P) of luminiferous columns optically brought into the common plane of the said selection windows and that each window is disposed between and above-mentioned opening and a respective photoelectric transducer (29a, 29b, 29c).

**Ansprüche** (für die Vertragsstaaten : DE und GB)

1. Verfahren zur Analyse der Konvergenz der drei Strahlen (FR, FV, FB) einer Farbbild-Katodenstrahlröhre mit drei In-Line-Elektronenkanonen und einer Ablenkeinheit (35), die eine Horizontal- und eine Vertikal-Ablenkspule enthält, wobei das Verfahren derart ist, daß das Lichtsignal, welches der von den Elektronen getroffene Bildschirm aussendet, von einer photoempfindlichen Zelle aufgenommen wird und daß weiterhin der in den Ablenkspulen fließende Strom gemessen wird, um eine Positionsanzeige zu liefern, dadurch gekennzeichnet, daß es für eine Röhre vom Schattenmaskentyp, deren Maske vorzugsweise gestreckte Löcher aufweist, darin besteht, daß zur Bestimmung der Projektion der Konvergenzabweichungen zwischen den drei Strahlen entlang wenigstens einer Bezugsachse und in einer Ablenkrichtung, die vorzugsweise senkrecht zu dieser Bezugsachse ist, eine einzige der drei Elektronenkanonen ($V_0$ oder $R_0$ oder $B_0$) in Betrieb genommen wird und ein langsam variierendes Signal an wenigstens eine der Ablenkspulen sowie ein Ablenksignal an wenigstens die andere Ablenkspule angelegt werden, so daß auf dem Bildschirm eine Lichtzeile erzeugt wird, die sich langsam parallel zu der Bezugsachse verschiebt, die Lichtintensität durch einen Analyseschlitz (20 oder 12) hindurch gemessen wird, der parallel zur Richtung der auf dem Bildschirm erzeugten Lichtzeile an der Stelle liegt, wo die Konvergenzcharakteristik bestimmt werden soll, die Werte des in den Spulen fließenden Stromes für maximale Lichtintensität, die durch den Schlitz hindurch wahrgenomen wird, festgestellt werden, dieselben Vorgänge für die zwei anderen Elektronenkanonen wiederholt werden und die Projektionen (xB, yB-xR, yR) der Konvergenzabweichungen entlang der Bezugsachse berechnet werden, wozu wenigstens die drei Werte des oben genannten Stromes und die Ablenkempfindlichkeiten der Katodenstrahlröhre in

dieser Zone des Bildschirms bekannt sind.

2. Analyseverfahren nach Anspruch 1, bei welchem nur eine der drei Elektronenkanonen ($R_0$ oder $V_0$ oder $B_0$) in Betrieb genommen wird, dadurch gekennzeichnet, daß es darin besteht, zur Bestimmung der Projektion der Konvergenzabweichungen zwischen den drei Strahlen (FR, FV, FB) längs wenigstens einer Bezugsachse und in der horizontalen und/oder vertikalen Ablenkrichtung, ein langsam variierendes Signal an die Ablenkspule anzulegen, die der Bezugsachse entspricht, und ein Ablenksignal an die andere Ablenkspule derart anzulegen, daß auf dem Bildschirm eine Lichtzeile erzeugt wird, welche sich langsam parallel zu der Bezugsachse bewegt, die Lichtintensität durch einen Analyseschlitz hindurch (20 oder 12) zu messen, der parallel zu der Ablenkrichtung und in derjenigen Zone des Bildschirms liegt, wo die Konvergenzcharakteristik bestimmt werden soll, den Wert des Stromes in den Ablenkspulen festzustellen, die der Bezugsachse entsprechen, wenn die durch den Schlitz hindurch wahrgenommene Lichtintensität maximal ist, dieselben Vorgänge für die beiden anderen Elektronenkanonen zu wiederholen und die Projektionen der Konvergenzabweichungen entlang der Bezugsachse zu berechnen, wozu wenigstens die drei Werte des vorstehend genannten Stroms sowie die Ablenkempfindlichkeit der Katodenstrahlröhre in der genannten Zone des Bildschirms bekannt sind.

3. Analyseverfahren nach Anspruch 2, dadurch gekennzeichnet, daß der Schlitz (20 oder 12) auf der Außenseite der Katodenstrahlröhre gegenüber der genannten Zone des Bildschirms zwischen diesem und einem photoelektrischen Wandler angeordnet wird.

4. Analyseverfahren nach Anspruch 2, dadurch gekennzeichnet, daß die Bezugsachse parallel zu der waagerechten Ablenkrichtung der Katodenstrahlröhre gelegt wird und der genannte Schlitz durch wenigstens eines der genannten Löcher (12) der genannten Schattenmaske gebildet wird, das in der genannten Zone liegt, und daß die Lichtsignale durch ein Selektionsfenster (50) hindurch, welches zwischen dem Bildschirm der Katodenstrahlröhre und einem photoelektrischen Wandler (29) angeordnet wird, beobachtet werden.

5. Analyseverfahren nach Anspruch 4, angewendet auf eine Katodenstrahlröhre, deren Bildschirm Spalten von Leuchtstoffen enthält, welche den drei Grundfarben entsprechen und in einer vorbestimmten, sich wiederholenden Reihenfolge mit vorbestimmter Teilung angeordnet sind, dadurch gekennzeichnet, daß zur Messung für eine der Elektronenkanonen ein schmales Selektionsfenster (20a) gegenüber einer der betreffenden Elektronenkanone entsprechenden Leuchtstoffspalte zwischen dem Bildschirm und einem photoelektrischen Wandler angeordnet wird und daß zur Messung für die zwei anderen Elektronenkanonen jedesmal wenigstens das genannte Selektionsfenster um eine Entfernung verschoben wird, die der optisch in die Ebene des Fensters verlegten Teilung entspricht, und daß die Projektionen der Konvergenzabweichungen zwischen den Elektronenkanonen berechnet werden, indem die bestimmten Entfernungen um eine ganze Anzahl von Teilungsschritten korrigiert werden, die von den relativen Lagen der Leuchtstoffspalten (B, V, R) abhängt, an denen die Messungen vorgenommen wurden, wozu die Werte der obengenannten Ströme und die horizontale Ablenkempfindlichkeit der Röhre in der genannten Zone des Bildschirms bekannt sind.

6. Analyseverfahren nach Anspruch 4, angewendet auf eine Katodenstrahlröhre, deren Bildschirm Leuchtstoffspalten mit den drei Grundfarben enthält, welche in einer vorbestimmten, sich wiederholenden Reihenfolge und mit vorbestimmtem Teilungsschritt angeordnet sind, wobei gemäß dem Verfahren die Elektronenkanonen jeweils nacheinander in Betrieb genommen werden und eine Positionsinformation über den auf dem Bildschirm aufleuchtenden Strahl aus dem Ablenkstrom abgeleitet wird, der im Maximum der über eine photoempfindliche Vorrichtung wahrgenommenen Lichtintensität erhalten wird, dadurch gekannzeichnet, daß ein breites Selektionsfenster (50), dessen Breite (1) aber kleiner als drei der genannten, optisch in die Ebene dieses Fensters verlegten Teilungsschritte ist, an eine beliebige Stelle des Bildschirms in der betrachteten Zone derart gelegt wird, daß zwei nebeneinanderliegende Leuchtstoffstreifen im wesentlichen über ihre gesamte Breite durch das Fenster hindurch sichtbar sind, daß die Lichtintensitäten gemessen werden, welche den drei Durchgängen der Leuchtstreifen entsprechen, die nacheinander von den drei Elektronenkanonen ($R_0$, $V_0$, $B_0$) erhalten werden, indem jedesmal der Strom in der Ablenkeinheit festgestellt wird, welcher dem Maximum der wahrgenommenen Lichtintensität entspricht, daß anschließend nach vorübergehender Abschaltung derjenigen Elektronenkanone, für die das Intensitätsmaximum das kleinste ist, die Projektion der Konvergenzabweichung zwischen den zwei anderen Elektronenkanonen berechnet wird, wobei die bestimmte Entfernung um den Wert eines der vorgenannten Teilungsschritte (P) korrigiert wird und wozu die zwei Stromwerte sowie die horizontale Ablenkempfindlichkeit in der betrachteten Zone des Bildschirms bekannt sind, daß in der betrachteten Zone das Selektionsfenster gegebenenfalls willkürlich verschoben wird und die aufeinanderfolgenden Messungen der Lichtintensitäten erneut durchgeführt werden, bis für eine gegebene Reihe von Meßwerten die zuvor abgeschaltete Elektronenkanone nicht mehr das schwächste Lichtsignal erzeugt, und daß anschließend in gleicher Weise die Projektion der Konvergenzabweichung zwischen dieser Elektronenkanone und derjenigen anderen Elektronenkanone berechnet wird, für welche nicht das schwächste Lichtsignal gefunden wurde.

7. Analyseverfahren nach Anspruch 4, angewendet auf eine Katodenstrahlröhre, deren Bildschirm Leuchtstoffspalten enthält, die den drei Grundfarben entsprechen und in einer vorbestimmten, sich wiederholenden Reihenfolge mit einem vorbestimmten Teilungsschritt angeordnet sind, wobei gemäß dem Verfahren die Elektronenkanonen jeweils nacheinander in Betrieb genommen werden und eine Positionsinformation über den aktivierten Strahl auf dem Bildschirm aus dem Ablenkstrom im Maximum der Lichtintensität abgeleitet wird, die über eine photoempfindliche Vorrichtung wahrgenommen wird, dadurch gekennzeichnet, daß eine Anordnung aus drei rechtwinkligen, gleichen Selektionsfenstern (50a, 50b, 50c) einer Breite (1), die zwischen dem zweifachen und dem dreifachen des vorgenannten, optisch in die Ebene des Fensters verlagerten Teilungsschrittes (p) beträgt, gegenüber einer beliebigen Stelle einer Zone des Bildschirms angeordnet wird, wo die horizontale Ablenkempfindlichkeit bekannt ist, wobei die Mitten dieser Fenster vorzugsweise gemäß den Scheiteln eines gleichschenkligen Dreieckes angeordnet werden, daß nacheinander auf dem Bildschirm der Durchgang der drei Lichtzeilen verursacht wird, welche durch jeweils eine Elektronenkanone erzeugt werden, und die entsprechende Lichtintensität durch jedes Fenster hindurch gemessen wird, wobei für jedes derselben der Strom in der Ablenkspule festgestellt wird, welcher einem Maximum der Lichtintensität entspricht, daß unter den gemessenen, durch jeweils eines der Fenster hindurch erhaltenen Signalen möglichst zwei Signale ausgewählt werden, die durch zwei verschiedene Elektronenkanonen erzeugt wurden und für die das gefundene Intensitätsmaximum ein hohes Maximum ist, und die Projektionen der Konvergenzabweichungen zwischen den verschiedenen Elektronenkanonen berechnet werden, indem die bestimmten Entfernungen um eine geeignete Anzahl von Teilungsschritten korrigiert werden, wozu die Werte des Stromes in der Ablenkeinheit, die jeweils den maximalen Intensitäten der ausgewählten Signale entsprechen, sowie die horizontale Ablenkempfindlichkeit in der betrachteten Zone bekannt sind.

8. Vorrichtung, die einen Meßwertaufnehmer zur Analyse der Konvergenz von drei Strahlen einer Farbbild-Katodenstrahlröhre bildet, die drei In-Linie-Elektronenkanonen und eine Schattenlochmaske aufweist, deren Löcher vorzugsweise gestreckt sind, und die mit zwei Ablenkeinrichtungen (37, 38), einer horizontalen und einer vertikalen, versehen ist und deren Bildschirm Leuchtstoffspalten (B, V, R) in den drei Grundfarben enthält, welche in einer vorbestimmten, sich wiederholenden Reihenfolge angeordnet sind, zur Durchführung des Verfahrens nach einem der vorstehenden Ansprüche, dadurch gekennzeichnet, daß sie ein Gehäuse (25), das mit einer Öffnung zur Positionierung an der Außenoberfläche des Bildschirms der Katodenstrahlröhre gegenüber einer Zone dieses Bildschirms, für welche die Konvergenzcharakteristik der Elektronenkanonen bestimmt werden soll, versehen ist, wenigstens eine photoelektrische Zelle (29) und wenigstens einen Analyseschlitz (20) oder ein Selektionsfenster (20a, 50) enthält, der bzw. das zwischen der genannten Öffnung und der photoelektrischen Zelle angeordnet ist.

9. Vorrichtung, die einen Meßwertaufnehmer bildet, nach Anspruch 8, dadurch gekennzeichnet, daß eine Linse (31) oder ein Linsensystem in dem Gehäuse (25) zwischen der genannten Öffnung und dem genannten Schlitz (20) bzw. Selektionsfenster angeordnet ist und daß letzterer bzw. letzteres im wesentlichen in einer Brennebene der Linse bzw. des Linsensystems angeordnet ist.

10. Vorrichtung, die einen Meßwertaufnehmer bildet, nach Anspruch 8 oder 9, dadurch gekennzeichnet, daß der Schlitz (20) im wesentlichen parallel zu der waagerechten Ablenkrichtung der Katodenstrahlröhre ist, wenn das Gehäuse sich in korrekter Stellung gegenüber dem Bildschirm der Katodenstrahlröhre befindet, und daß dieser Schlitz eine Breite aufweist, die wenigstens gleich sechs optisch in die Ebene des Schlitzes verlagerten Teilungsschritten (p) der Leuchtstoffe ist.

11. Vorrichtung, die einen Meßwertaufnehmer bildet, nach Anspruch 8 oder 9, zur Durchführung des Verfahrens nach Anspruch 5, dadurch gekennzeichnet, daß das genannte Selektionsfenster (20a) schmal ist und seine größte Abmessung parallel zu den genannten Leuchtstoffspalten ist, wenn das Gehäuse sich in der korrekten Stellung gegenüber dem Bildschirm der Katodenstrahlröhre befindet.

12. Vorrichtung, die einen Meßwertaufnehmer bildet, nach Anspruch 8 oder 9, zur Durchführung des Verfahrens nach Anspruch 6, dadurch gekennzeichnet, daß das genannte Selektionsfenster (50) rechtwinklig ist, daß seine Breite im wesentlichen parallel zu der Richtung der waagerechten Ablenkung liegt, wenn das Gehäuse in korrekter Stellung gegenüber dem Bildschirm angeordnet ist, und daß die genannte Breite (1) zwischen dem Zweifachen und Dreifachen des in die Ebene des Selektionsfensters verlagerten Teilungsschrittes (p) der Leuchtstoffspalten beträgt.

13. Vorrichtung, die einen Meßwertaufnehmer bildet, nach Anspruch 8 oder 9, zur Durchführung des Verfahrens nach Anspruch 7, dadurch gekennzeichnet, daß sie drei rechtwinklige, gleiche und koplanare Selektionsfenster (50a, 50b, 50c) enthält, deren Mitten im wesentlichen an den Scheiteln eines gleichschenkligen Dreiecks angeordnet sind, daß die Breite (1) jedes Fensters im wesentlichen parallel zu der waagerechten Ablenkrichtung der Katodenstrahlröhre liegt, wenn das Gehäuse in korrekter Stellung vor dem Bildschirm der Katodenstrahlröhre ist, daß die Breite (1) zwischen dem Zweifachen und Dreifachen des in die gemeisame Ebene der Selektionsfenster verlagerten Teilungsschrittes (p) der Leuchtstoffspalten beträgt und daß jedes Fenster zwischen einer genannten Öffnung und einem entsprechenden photoelektrischen Wandler (29a, 29b, 29c) angeordnet ist.

**Ansprüche** (für den Vertragsstaat NL)

1. Analyseverfahren der Konvergenz dreier Bündel (FR, FV, FB) einer Farbkathodenröhre mit drei sich in einer Linie befindlichen Kanonen und einer vorzugsweise mit länglichen Löchern perforierten Schattenmaske, welche Farbkathodenröhre mit einer Spulen zur horizontalen beziehungsweise vertikalen Ablenkung aufweisenden Ablenkeinheit (35) versehen ist, dadurch gekennzeichnet, dass er zur Bestimmung der Projektion der Konvergenzabweichungen zwischen den drei Bündel entlang wenigstens einer Referenzachse nach einer zu dieser Referenzachse vorzugsweise sènkrechten Ablenkrichtung, darin besteht eine einzige der drei Kanonen ($V_0$ oder $R_0$ oder $B_0$) einzuschalten und ein langsam veränderliches Signal an wenigstens eine der Ablenkspulen und ein Abtastsignal an wenigstens eine andere Ablenkspule anzubringen, so dass auf dem Bildschirm eine sich langsam parallel zu der Referenachse fortbewegende Lichtlinie erzeugt wird, die Lichtintensität über einen Analyseschlitz (20 oder 12) zu messen, der parallel zu der Richtung der auf dem Bildschirm gebildeten Lichtlinie an der Stelle an der man die Konvergenzmerkmale bestimmen möchte gelegen ist, die in den Spulen befindlichen Stromwerte festzulegen, wenn die über den Schlitz wahrgenommene Lichtintensität am grössten ist, die selben Operationen für die beiden anderen Kanonen zu wiederholen und die Projektionen (xB, yB-xR, yR) der Konvergenzabweichungen nach der Referenzachse zu berechnen, wobei wenigstens die drei vorgenannten Stromwerte und die Ablenkempfindlichkeit der Kathodenröhren in der Bildschirmzone bekannt sind.

2. Analyseverfahren nach Anspruch 1, dadurch gekennzeichnet, dass er zur Bestimmung der Projektion der Konvergenzabweichungen zwischen den drei Bündeln (FR, FV, FB) entlang wenigstens einer Referenzachse nach der horizontalen oder vertikalen Ablenkrichtung, darin besteht eine einzige der drei Kanonen ($V_0$ oder $R_0$ oder $B_0$) einzuschalten und ein langsam veränderliches Signal an die der Referenzachse entsprechende Ablenkspule und ein Abtastsignal an die andere Ablenkspule anzubringen, so dass auf dem Bildschirm eine sich langsam parallel zu der Referenzachse fortbewegende Lichtlinie erzeugt wird, die Lichtintensität über einen Analyseschlitz (20 oder 12) zu messen, der parallel zu der Richtung der Abtastung in einer Bildschirmzone wo man die Konvergenzmerkmale bestimmen möchte gelegen ist, den Stromwert in dem der Achse entsprechenden Ablenkspulen festzulegen, wenn die über den Schlitz wahrgenommene Lichtintensität am grössten ist, die selben Operationen für die beiden anderen Kanon zu wiederholen und die Projektionen der Konvergenzabweichungen nach der Referenzachse zu berechnen, wobei wenigstens die drei vorgenannten Stromwerte und die Ablenkempfindlichkeit der Kathodenröhre in der Bildschirmzone bekannt sind.

3. Analyseverfahren nach Anspruch 2, dadurch gekennzeichnet, dass man den Schlitz (20 oder 12) am Äusseren der Kathodenröhre gegenüber der Zone des Bildschirm zwischen diesem letzeren und einem photoelektrischen Transduktor anbringt.

4. Analyseverfahren nach Anspruch 2, dadurch gekennzeichnet, dass man, wobei die Referenzachse zu der Richtung der horizontalen Ablenkung der Kathodenröhre parallel ist, den Schlitz mit wenigstens einem der vorgenannten Löcher (12) der vorgenannten in der Zone liegenden Schattenmaske verwirklicht und dass man Lichtsignale durch ein Auswahlfenster (50) beobachtet, das man zwischen den Bildschirm der Kathodenröhre und einem photoelektrischen Transduktor (29) anbringt.

5. Analyseverfahren nach Anspruch 4, das auf eine Kathodenröhre angewandt wird, deren Bildschirm Leuchtstoffsäulen umfasst, welche den drei in einer vorherbestimmten wiederholenden Ordnung mit einem vorbestimmten Schritt angeordneten Grundfarben entsprechen, dadurch gekennzeichnet, dass man zum Messen bei einer entsprechenden Kanone gegenüber einer der betreffenden Kanone entsprechenden Leuchtstoffsäule zwischen dem Bildschirm und einem photoelektrischen Transduktor ein schmales Auswahlfenster (20a) anbringt und dadurch, dass man zum Messen der beiden anderen Kanonen jedesmal wenigstens das Auswahlfenster um den Abstand des optisch in die Ebene des Fensters geholten Schrittes verschiebt und dass man die Projektionen der Konvergenzabweichungen zwischen den Kanonen errechnet indem man auf eine ganze Zahl von Schritten abhängend von den relativen Lagen der Leuchtstoffsäulen (B, V, R) korrigiert auf denen man die Messung vorgenommen hat, wobei die Entfernungen unter Kenntnis der vorgenannten Stromwerte und der Ablenkempfindlichkeit der Kathodenröhre in der vorgenannten Bildschirmzone bestimmt werden.

6. Analyseverfahren nach Anspruch 4, das auf eine Kathodenröhre angewandt wird, deren Bildschirm Leuchtstoffsäulen in den drei Grundfarben umfasst, welche in einer vorherbestimmten wiederholenden Ordnung mit einem vorbestimmtent Schritt angebracht sind, dadurch gekennzeichnet, dass man ein breites Auswahlfenster (50), dessen Breite (1) jedoch kleiner als drei vorgenannte optisch in die Ebene des Fensters auf einer beliebigen Stelle des Bildschirms in der betreffenden Zone geholte Schritte ist, so dass zwei anliegende Leuchtstoffbänder in etwa vollständig in ihrer Breite durch das Fenster sichtbar werden, die den drei Passagen der Leuchtbänder entsprechenden Lichtintensitäten zu messen, die nacheinander von den drei Kanonen ($R_0$, $V_0$, $B_0$) ausgehend erhalten werden, indem jedesmal der Strom in der Ablenkeinheit, welcher dem wahrgenommenen Leuchtintensitätsmaximum entspricht, dann, nachdem vorläufig die die geringste Maximalintensität aufweisende Kanone ausser Acht gelassen wurde, die Projektion der Konvergenzabweichung zwischen den beiden anderen Kanonen zu errechnen indem man den bestimmten Abstand um einen vorgenannten Schritt (p) korrigiert, wobei die beiden Stromwerte und die Empfindlichkeit der horizontalen Ablenkung in der betreffenden Zone des Bildschirms bekannt sind, eventuell willkürlich in der betreffenden Zone das Auswahlfenster verschiebt und jedesmal die nacheinanderfolgenden Messungen der Lichtintensitäten wieder neubeginnt bis für eine gegebenen Reihe von Massen, die vorher ausgeschiedene Kanone nicht mehr das schwächste Signal erzeugt und man dann in der gleichen Weise die Projektion der Konvergenzabweichung zwischen dieser Kanone und demjenigen der beiden anderen errechnet, für den man nicht das schwächste Lichtsignal aufgezeichnet hat.

7. Analyseverfahren nach Anspruch 4, das auf eine Kathodenröhre angewandt wird deren Bildschirm Leuchtstoffsäulen umfasst, welche den drei in einer vorherbestimmten wiederholenden Ordnung mit einem vorbestimmten Schritt angeordneten Grundfarben entsprechen, dadurch gekennzeichnet, dass man drei gleiche rechteckige Auswahlfenster (50a, 50b, 50c) anbringt, deren Breite (1) sich zwischen zwei und drei vorstehend genannten Schritten (p) bewegt, die optisch in die Ebene des Fensters gegenüber irgendeine Stelle auf dem Bildschirm, wo die Empfindlichkeit der horizontalen Ablenkung bekannt ist geholt sind, wobei die Mittelpunkte der Fenster vorzugsweise entsprechend den Spitzen eines gleichschenkligen Dreiecks angebracht sind, nacheinander auf dem Bildschirm die Passage der drei von jeder Kanone erzeugten Leuchtlinien bewirkt und die entsprechenden Leuchtintensitäten durch jedes Fenster misst, in dem für jedes der Strom in der entsprechenden Ablenkspule bei maximaler Leuchtintensität wahrgenommen wird, bei den durch jedes Fenster erhaltenen Signalen höchstens zwei Signale auswählt, die durch zwei verschiedene Kanonen erzeugt werden und für die das wahrgenommene Intensitätsmaximum gross ist und die Projektion der Konvergenzabweichungen zwischen den verschiedenen Kanonen errechnet, indem man die bestimmten Entfernungen um eine geeignete Anzahl an Schritten korrigiert, wobei die den jeweiligen Maximalintensitäten der ausgewählten Signale entsprechenden Stromwerte in der Ablenkeinheit und die horizontale Ablenkempfindlichkeit in der betreffenden Zone bekannt sind.

8. Vorrichtung, welche einen Messfühler zur Analyse der Konvergenz der drei Bündel einer Farbkathodenröhre mit drei sich in einer Linie befindlichen Kanonen und einer vorzugsweise mit länglichen Löchern perforierten Schattenmaske bildet, welche Vorrichtung mit zwei Mitteln (37), 38) zur horizontalen beziehungsweise vertikalen Ablenkung versehen ist und deren Bildschirm Leuchtstoffsäulen (B, V, R) mit den drei in einer vorbestimmten wiederholenden Ordnung angeordneten Grundfarben umfasst, zur Ausübung des Verfahrens nach einem der vorgehenden Ansprüche, dadurch gekennzeichnet, dass er ein Gehäuse (25) umfasst, das mit einer Öffnung ausgestattet ist, die dazu bestimmt ist auf die äussere Oberfläche des Bildschirms der Kathodenröhre gegenüber einer Zone dieses Bildschirms gesetzt zu werden für die man die Konvergenzmerkmale der Kanonen zu bestimmen wünscht, wenigstens eine photoelektrische Zelle (29) und wenigstens einen Analyseschlitz (20) oder ein zwischen der Öffnung und der photoelektrischen Zelle angebrachtes Auswahlfenster (20a, 50).

9. Vorrichtung, welche einen Messfühler nach Anspruch 8 bildet, dadurch gekennzeichnet, dass eine Linse (31) oder eine Linsensystem in dem Gehäuse (25) zwischen der Öffnung und dem Schlitz (20) oder Auswahlfenster untergebracht ist und dass dieses letztere ungefähr in einer Fokusebene der Linse oder Linsensysteme angebracht ist.

10. Vorrichtung, welche einen Messfühler nach Anspruch 8 oder 9 bildet, dadurch gekennzeichnet, dass der Schlitz (20) ungefähr parallel zu der horizontalen Ablenkrichtung der Kathodenröhre ist, wenn sich das Gehäuse in richtiger Lage gegenüber dem Bildschirm befindet und dadurch, dass dieser Schlitz eine Breite besitzt, die wenigstens gleich sechs Schritten (p) des optischen in die Ebene des Schlitzes geholten Leuchtstoffbelags ist.

11. Vorrichtung, welche einen Messfühler nach Anspruch 8 oder 9 zur Ausübung des Verfahrens nach Anspruch 6 bildet, dadurch gekennzeichnet, dass das Auswahlfenster (20a) eng ist und an seinem grössten Umfang parallel zu den vorstehend genannten Leuchtstoffsäulen ist, wenn sich das Gehäuse in richtiger Lage gegenüber dem Bildschirm befindet.

12. Vorrichtung, welche einen Messfühler nach Anspruch 8 oder 9 zur Ausübung des Verfahrens nach Anspruch 6 bildet, dadurch gekennzeichnet, dass das Auswahlfenster (50a) rechteckig ist, dass seine Breite ungefähr parallel zu der Richtung der horizontalen Ablenkung ist, wenn sich das Gehäuse in richtiger Lagfe gegenüber dem Bildschirm befindet und dass die Breite (1) sich zwischen zwei und drei Schritte (p) der optisch in die Ebene des Auswahlfensters geholten Leuchtstoffsäulen bewegt.

13. Vorrichtung, welche einen Messfühler nach Anspruch 8 oder 9 zur Ausübung des Verfahrens nach Anspruch 7 bildet, dadurch gekennzeichnet, dass er drei identische rechteckige und sich in der gleichen Ebene befindliche Auswahlfenster (50a, 50b, 50c) umfasst, deren Mittelpunkte ungefähr entsprechend den Spitzen eines gleichschenkligen Dreicks angebracht sind, dass die Breite (1) jedes Fensters ungefähr parallel zur horizontalen Ablenkrichtung der Kathodenröhre ist, wenn sich das Gehäuse in richtiger Lage gegenüber dem Bildschirm der Kathodenröhre befindet, dass die Breite (1) sich zwischen zwei und drei Schritten (p) der optisch in die gemeinsamen Ebenen der Auswahlfenster geholten Leuchtstoffsäulen bewegt und dass jedes Fenster zwischen der vorstehend genannten Öffnung und einem jeweiligen photoelektrischen Transduktor (29a, 29b, 29c) angebracht ist.

FIG 1

FIG 2

FIG 3

FIG 4

FIG 5

FIG 6

FIG 7

FIG 8

FIG 9

FIG 10

FIG 11

4